# EUROPÄISCHE PATENTSCHRIFT

(11) **EP 0 839 902 B1**
(45) Veröffentlichungstag und Bekanntmachung des Hinweises auf die Patenterteilung: **18.12.2002**
(21) Anmeldenummer: 97118943.6
(22) Anmeldetag: 30.10.1997
(51) Int. Cl.: C11D 3/37, C11D 3/39, C11D 17/00

(54) **Bleichhilfsmittel enthaltende Mikrokapseln**
Microcapsules containig bleaching aids
Microcapsules contenant des adjuvants de blanchiment

(30) Priorität: 31.10.1996 DE 19645024
(43) Veröffentlichungstag der Anmeldung: 06.05.1998
(73) Patentinhaber: BASF AKTIENGESELLSCHAFT, 67056 Ludwigshafen (DE)
(72) Erfinder: Boeckh, Dieter, Dr., 67117 Limburgerhof (DE); Potthoff-Karl, Birgit, Dr., 67061 Ludwigshafen (DE); Bertleff, Werner, Dr., 68519 Viernheim (DE); Neumann, Peter, Dr., 68309 Mannheim (DE); Jahns, Ekkehard, Dr., 69469 Weinheim (DE); Biastoch, Ralf, Dr., 67346 Speyer (DE); Wehlage, Thomas, Dr., 67346 Speyer (DE)
(74) Vertreter: Isenbruck, Günter, Dr.

(56) Entgegenhaltungen:
- EP-A- 0 653 485
- EP-A- 0 691 398
- WO-A-93/22417
- DE-A- 4 321 205
- US-A- 3 666 680
- US-A- 5 281 356

## Beschreibung

Die Erfindung betrifft Bleichhilfsmittel enthaltende Mikrokapseln, Verfahren zu ihrer Herstellung, sowie diese enthaltende Wasch- und Reinigungsmittel.

Verschiedene Verfahren zum Verkapseln von Substanzen, unter anderem von Bleichhilfsmitteln, sind bekannt.

Aus der US 3,908,045 ist ein Einkapselungsverfahren für Teilchen bekannt, bei dem eine nichtwäßrige Lösung einer Beschichtungssubstanz aus einer Düse auf ein Wirbelbett der zu beschichtenden Teilchen gesprüht wird. Als Beschichtungssubstanz wird eine Fettsäure mit 12-20 Kohlenstoffatomen verwendet, insbesondere zur Beschichtung von Chlor freisetzenden Mitteln, die als Bleichmittel Verwendung finden. Weitere angegebene Substanzen sind Natriumperborat, Enzyme, optische Aufheller, Natriumacetylsalicylat, antibakterielle Mittel, sowie Polyethylenterephthalatcopolymere. Wahlweise kann eine zweite Beschichtung mit einer Lösung eines Alkalihydroxids erfolgen.

Aus der US 4,078,099 ist ein Verfahren zum Beschichten von Bleichmitteln, insbesondere Chlorbleichmitteln bekannt, bei dem diese in einem Trommelmischer mit geschmolzenen Fettsäuren besprüht werden. Es können eine oder mehrere Schichten aufgesprüht werden, wobei die weiteren Schichten von der ersten unterschiedlich sein können und beispielsweise eine Fettsäure und ein Polyoxyethylen/Polyoxypropylen-Copolymer enthalten können. Die Fettsäuren enthalten 12-20 Kohlenstoffatome.

Nachteil dieser Sprühverfahren ist, daß das Kapselmaterial entweder geschmolzen oder in einem geeigneten Lösungsmittel gelöst werden muß. Bei Verwendung von polymeren Kapselmaterialien kann dabei zudem die Viskosität der Lösung das Ansprühen erschweren beziehungsweise unmöglich machen. Zudem kann der bei Polymeren teilweise notwendige Temperaturbereich im Wirbelschichtverfahren häufig nicht angewendet werden. Definierte Kapseldicken sind schwer herzustellen.

Zudem muß bei dieser Art der Verkapselung das Bleichmittel in festem Zustand vorliegen.

Aus der EP-A-0 653 485 sind Waschmittelzusammensetzungen bekannt, die Kapseln enthalten, die mit Öldispersionen von Enzymen oder Bleichkatalysatoren gefüllt sind. Die Kapseln selbst sind aus einem Polymer aufgebaut, das in Wasser löslich oder dispergierbar ist. Die Kapseln werden aus einer Öldispersion in einer wäßrigen Lösung des Polymers durch Mischen mit einem Nicht-Lösungsmittel des Polymers ausgefällt. Zudem kann die Kapsel aus einer Polymerlösung in einem Extrusionsverfahren um die Öldispersion herum gebildet werden. Die Kapsel soll in einer flüssigen Waschmittelzusammensetzung nicht löslich sein, sich jedoch beim Einsatz in der daraus erzeugten Waschflotte schnell auflösen. Verwendet wird eine Polymerlösung, die Polyvinylalkohol/Polystyrol oder Polyvinylalkohol und einen Alkali-löslichen Emulsionsverdicker oder ein Alkali-lösliches Polymer oder ein Polyacrylatlatex mit einer Carbonsäure enthält.

Es ist nicht immer möglich, definierte gleichmäßige Kapseldicken zu erhalten. Zudem erfolgt das Auflösen der Kapseln in Waschflotten schnell.

Aufgabe der vorliegenden Erfindung ist die Bereitstellung von flüssigen oder festen Bleichhilfsmitteln in einer Form, in der sie in Waschmittelformulierungen ohne Beeinträchtigung anderer Waschmittelkomponenten gelagert werden können, und die eine definierte verzögerte Freisetzung des Bleichhilfsmittels in einer Wasch- oder Reinigungsmittelflotte erlaubt.

Die vorstehende Aufgabe wird gelöst durch Bleichhilfsmittel enthaltende Mikrokapseln, erhältlich durch durch Polymerisieren von Monomergemischen, die
5 bis 100 Gew.-% mindestens eines ethylenisch ungesättigten Carbonsäureanhydrids (a),
0 bis 95 Gew.-% mindestens eines von den Monomeren der Gruppe (a) verschiedenen monoethylenisch ungesättigten Monomeren (b),
0 bis 80 Gew.-% an vernetzend wirkenden Monomeren (c), die mindestens zwei monoethylenisch ungesättigte, nicht konjugierte Doppelbindungen im Molekül aufweisen, und
0 bis 20 Gew.-% wasserlösliche monoethylenisch ungesättigte Monomere (d)
enthalten, wobei die Komponenten (a) bis (d) insgesamt 100 Gew.-% ergeben, in der Ölphase einer stabilen Öl-in-Wasser-Emulsion in Gegenwart von Radikale bildenden Polymerisationsinitiatoren, wobei man gegebenenfalls während der Polymerisation die Temperatur des polymerisierenden Reaktionsgemisches kontinuierlich oder periodisch erhöht, wobei die Ölphase das Bleichhilfsmittel enthält oder aus diesem besteht. Weitere Lösungen sind ein Verfahren zur Herstellung solcher Mikrokapseln und diese enthaltende Waschmittel.

Mikrokapseln dieser Art sind an sich bekannt und z.B. in der DE-A 43 21 205 beschrieben.

Das Verfahren zur Herstellung von Bleichhilfsmittel enthaltenden Mikrokapseln ist dadurch gekennzeichnet, daß man Monomergemische, die
5 bis 100 Gew.-% mindestens eines ethylenisch ungesättigten Carbonsäureanhydrids (a),
0 bis 95 Gew.-% mindestens eines von den Monomeren der Gruppe (a) verschiedenen monoethylenisch ungesättigten Monomeren (b), und
0 bis 80 Gew.-% vernetzend wirkenden Monomeren (c), die mindestens zwei monoethylenisch ungesättigte, nicht konjugierte Doppelbindungen im Molekül aufweisen, und
0 bis 20 Gew.-% wasserlösliche monoethylenisch ungesättigte Monomere (d)
enthalten, wobei die Komponenten (a) bis (d) insgesamt 100 Gew.-% ergeben, in der Ölphase einer stabilen Öl-in-Wasser-Emulsion in Gegenwart von Radikale bildenden Initiatoren polymerisiert, wobei man gegebenenfalls während der Polymerisation die Temperatur des polymerisierenden Reaktionsgemisches kontinuierlich oder periodisch erhöht, wobei die Ölphase das Bleichhilfsmittel enthält oder aus diesem besteht.

Das Herstellungsverfahren an sich ist bekannt und z.B. in DE-A 43 21 205 beschrieben.

Bei der erfindungsgemäßen Mikroverkapselung wird somit im Unterschied zu bekannten Verfahren eine Polymerhülle in situ durch Polymerisation von radikalisch polymerisierbaren Monomeren um einen Flüssigkeitstropfen herum erzeugt. Es wird somit kein bereits hergestelltes Polymer zur Herstellung der Kapsel ausgefällt. Diese in situ Verkapselung ermöglicht den Einschluß von Flüssigkeiten, insbesondere Ölen in die Mikrokapseln. Somit können flüssige oder in Öl gelöste oder dispergierte Bleichhilfsmittel durch die erfindungsgemäße Kapselbildung konfektioniert werden. Es war nicht zu erwarten, daß sich die Bleichhilfsmittel, insbesondere Bleichaktivatoren durch das erfindungsgemäße Verfahren verkapseln lassen, da die Bleichhilfsmittel, insbesondere Bleichaktivatoren Reaktionszentren enthalten, die bei radikalischen Polymerisationen als Polymerisationsregler fungieren sollten. Dennoch ist es erfindungsgemäß möglich, eine radikalische Polymerisation der Monomere zur Ausbildung von dichten geschlossenen Kapseln um die Bleichhilfsmittel zu erreichen.

Die Erfindung betrifft außerdem die Verwendung der oben beschriebenen Mikrokapseln zur kontrollierten Freisetzung von Bleichhilfsmitteln, die im Kernmaterial der Mikrokapseln enthalten sind, durch Zerstörung ihrer Schale infolge der Einwirkung von wäßrigen Basen.

Die Schale der Mikrokapseln ist aus einem Polymerisat aufgebaut, das Carbonsäureanhydridgruppen enthält.

Als Monomere der Gruppe (a) werden ethylenisch ungesättigte Carbonsäureanhydride eingesetzt. Dabei kann es sich um Anhydride von ethylenisch ungesättigten Dicarbonsäuren und/oder um Anhydride von ungesättigten Monocarbonsäuren handeln. Ethylenisch ungesättigte innere Anhydride von Dicarbonsäuren werden dabei in die Polymerkette eingebaut, ohne daß es zu Vernetzungen im Molekül kommt. Anhydride von ungesättigten Monocarbonsäuren weisen zwei ethylenische Doppelbindungen auf, die eine Vernetzung des Polymers bei der Polymerisation ermöglichen. Sie kommen somit auch als vernetzend wirkendes Monomer (c) in Betracht. Der Einbau von inneren Anhydriden von Dicarbonsäuren führt zu Anhydriden, die in Wasser langsam hydrolysiert werden im Vergleich zu Anhydriden von ungesättigten Monocarbonsäuren, die leichter hydrolysiert werden. Durch Einstellung eines geeigneten Verhältnisses der Anhydride ist es möglich, die Hydrolyseempfindlichkeit der erhaltenen Polymere und der somit erhaltenen Kapseln in weitem Umfang zu bestimmen. Monoethylenisch ungesättigte Monocarbonsäuren, die untereinander oder mit unterschiedlichen Monocarbonsäuren oder mit Dicarbonsäuren Anhydride bilden können, weisen im allgemeinen 3 bis 20, vorzugsweise 3 bis 12, insbesondere 3 bis 6 C-Atome auf. Es kann sich somit um symmetrische oder unsymmetrische Anhydride der ungesättigten Monocarbonsäuren handeln. Geeignete monoethylenisch ungesättigte Monocarbonsäuren sind beispielsweise Acrylsäure, Methacrylsäure, Ethylacrylsäure, Allylessigsäure, Crotonsäure, Vinylessigsäure, oder ähnliche. Monoethylenisch ungesättigte Dicarbonsäuren können innere Anhydride bilden oder Anhydride mit weiteren Dicarbonsäuren oder Monocarbonsäuren, wobei die verbleibenden Säurefunktionen in Form von Estern, Amiden oder Salzen vorliegen können. Sie haben dann Eigenschaften, die denen der Monocarbonsäureanhydride ähneln. Geeignete monoethylenisch ungesättigte Dicarbonsäuren sind Maleinsäure, Mono- und Dialkylmaleinsäure mit C₁₋₁₂-, vorzugsweise C₁₋₆-Alkylresten, Maleinsäuremonoalkylester, wobei der Alkylrest eine entsprechende Anzahl von C-Atomen aufweist, Itaconsäure, Mesaconsäure, Fumarsäure, Citraconsäure, Methylenmalonsäure. Innere Anhydride von monoethylenisch ungesättigten Dicarbonsäuren liegen insbesondere in Maleinsäureanhydrid, Itaconsäureanhydrid und Citraconsäureanhydrid vor.

Besonders bevorzugt werden Maleinsäureanhydrid und Acrylsäureanhydrid sowie deren Gemische eingesetzt. Durch Wahl eines geeigneten Mischungsverhältnisses des langsamer hydrolysierenden Maleinsäureanhydrids mit dem schneller hydrolysierenden Acrylsäureanhydrid kann die Hydrolysebeständigkeit der gebildeten Kapseln in einem weiten Bereich eingestellt werden. Vorzugsweise beträgt das Molverhältnis von Maleinsäureanhydrid zu Acrylsäureanhydrid 1:10 bis 10:1, besonders bevorzugt 1:5 bis 5:1. Anstelle von Acrylsäureanhydrid kann vorzugsweise auch Methacrylsäureanhydrid eingesetzt werden. Die Menge der Komponente (a) kann in einem weiten Bereich variieren, von 5 bis 100 Gew.-%, vorzugsweise 10 bis 80 Gew.-%, insbesondere 10 bis 60 Gew.-%, bezogen auf das Gesamtgewicht der Monomere. Dabei kann die Komponente (a) vorzugsweise aus Maleinsäureanhydrid, Acrylsäureanhydrid, Methacrylsäureanhydrid und deren Gemischen bestehen. Besonders bevorzugt verwendet man Acrylsäureanhydrid und/oder Methacrylsäureanhydrid.

Die Monomeren der Gruppe (b) werden gegebenenfalls eingesetzt und können bis zu 95 Gew.-% in den zur Polymerisation eingesetzten Monomergemischen enthalten sein. Hierbei handelt es sich um monoethylenisch ungesättigte Monomere, die von den Monomeren der Gruppe (a) verschieden sind und die unter den Polymerisationsbedingungen nicht mit den Anhydridgruppen der Monomeren (a) reagieren. Geeignete Monomere dieser Art sind beispielsweise Acrylsäure- oder Methacrylsäureester von einwertigen C₁- bis C₂₄-Alkoholen, beispielsweise Methylacrylat, Methylmethacrylat, Ethylacrylat, Ethylmethacrylat, n-Propylacrylat, n-Propylmethacrylat, Isopropylacrylat, Isopropylmethacrylat, n-Butylacrylat, Isobutylacrylat, tert.-Butylacrylat, n-Butylmethacrylat, Isobutylmethacrylat, tert.-Butylmethacrylat, Octylacrylat, Octylmethacrylat, 2-Ethylhexylacrylat, 2-Ethylhexylmethacrylat, Laurylacrylat, Laurylmethacrylat, Stearylacrylat, Palmitylacrylat, Stearylmethacrylat und Palmitylmethacrylat, Styrol, α-Methylstyrol, Vinylacetat, Vinylpropionat, Vinylpyridin, Methacrylnitril, Methacrylamid, N-Methylmethacrylamid, Dimethylaminopropylmethacrylamid, Cyclohexylacrylat, Cyclohexylmethacrylat, Phenylacrylat, Phenylmethacrylat, Dimethylaminoethylacrylat, Dimethylaminoethylmethacrylat, Vinylcyclohexan,Vinylchlorid, Vinylidenchlorid, 2-Hydroxypropylacrylat und 2-Hydroxypropylmethacrylat.

Die Monomeren der Gruppe (b) werden, sofern sie bei der Polymerisation eingesetzt werden, in Mengen bis zu 95 Gew.-%, vorzugsweise bis zu 90 Gew.-% verwendet. Bevorzugt eingesetzte Monomere der Gruppe (b) sind Methylmethacrylat, Methylacrylat, Ethylacrylat, Ethylmethacrylat, Styrol, Vinylacetat und Vinylpyridin.

Als Monomere der Gruppe (c) kommen vernetzend wirkende Monomere, die mindestens zwei monoethylenisch ungesättigte, nicht konjugierte Doppelbindungen im Molekül aufweisen, in Betracht. Verbindungen dieser Art sind beispielsweise Acrylsäure- und Methacrylsäureester, die sich von zweiwertigen 2 bis 24 C-Atome enthaltenden Alkoholen ableiten, z.B. Ethylenglykoldiacrylat, Ethylenglykoldimethacrylat, Propylenglykoldimethacrylat, 1,4-Butandioldiacrylat, 1,4-Butandioldimethacrylat, 1,6-Hexandioldiacrylat und 1,6-Hexandioldimethacrylat, Divinylbenzol, Methallylmethacrylamid, Allylmethacrylat, Allylacrylat, Methylenbisacrylamid, Trimethylolpropantriacrylat, Trimethylolpropantrimethacrylat, Pentaerythrittriallylether, Pentaerythrittetraacrylat und Pentaerythrittetramethacrylat. Wie bei den Monomeren der Gruppen (a) und (b), so können auch die Monomeren der Gruppe (c) gegebenenfalls in Form von Mischungen eingesetzt werden. Die Monomeren der Gruppe (c) werden gegebenenfalls mitverwendet und können bis zu 80 Gew.-% in der zur Polymerisation eingesetzten Monomermischung enthalten sein.

Die Monomeren der Gruppe (c) sind vorzugsweise bis zu 50 Gew.-% in der zur Polymerisation eingesetzten Monomermischung enthalten. Die Verwendung dieser Monomeren bewirkt, daß sich die Mikrokapselwände bei Einwirkung von wäßrigen Basen nicht vollständig darin auflösen, sondern nur mehr oder weniger stark quellen. Durch das Quellen wird die Mikrokapselwand für das Bleichhilfsmittel durchlässiger, so daß über die Menge des eingesetzten Vernetzers eine kontrollierte Freisetzung des Bleichhilfsmittels über einen längeren Zeitraum ermöglicht wird. In kleineren Mengen, d.h. bis zu etwa 10 Gew.-% an Monomer der Gruppe (c) in der Monomermischung, bewirkt ein Vernetzer eine verzögerte Freisetzung des Bleichhilfsmittels und des gegebenfalls in Öl gelösten Bleichhilfsmittels nach der Hydrolyse der Schale der Mikrokapseln. Größere Mengen an Vernetzer führen im allgemeinen zu einer langsameren Freigabe des Bleichhilfsmittel bei alkalischer Hydrolyse. Als Vernetzer wirken auch die Anhydride von ethylenisch ungesättigten Monocarbonsäuren, wobei sich jedoch die Vernetzung beim Kontakt mit Wasser mit einer einstellbaren Verzögerung auflöst.

Die Schale der Mikrokapseln kann gegebenenfalls durch Mitverwendung von Monomeren der Gruppe (d) bei der Polymerisation weiter modifziert werden. Monomere der Gruppe (d) sind polar und gut wasserlöslich. Beispiele hierfür sind Acrylsäure, Methacrylsäure, Acrylamid, Hydroxyethylacrylat, Hydroxyethylmethacrylat, Vinylsulfonsäure, Acrylamidopropansulfonsäure, Styrolsulfonsäure, Sulfoethylacrylat, Sulfoethylmethacrylat, Sulfopropylacrylat, Sulfopropylmethacrylat und Acrylnitril. Diese Gruppe von Monomoren kann gegebenenfalls in den zur Polymerisation eingesetzten Monomermischungen enthalten sein und wird in Mengen bis zu 20 Gew.-%, vorzugsweise bis zu 10 Gew.-%, bezogen auf die Gesamtmenge der eingesetzten Monomeren verwendet.

Die Mikrokapseln weisen erfindungsgemäß eine solche Dicke auf, die die zeitlich verzögerte Freisetzung des enthaltenen Bleichhilfsmittels beim Eintragen der Mikrokaspeln in eine Waschflotte ermöglicht. Die Wandstärke muß dabei so bemessen sein, daß der Inhalt der Mikrokapsel bei der Lagerung gegenüber der Umgebung mechanisch geschützt ist, wobei jedoch in der Waschflotte ein Auflösen der Mikrokapsel möglich ist. Dabei hängt die benötigte Mindestwandstärke für die eingesetzten Mikrokapseln von der Grösse und Art des enthaltenen Kerns ab.

Gemäß einer Ausführungsform der Erfindung beträgt der Anteil der Hülle der Mikrokapsel, bezogen auf das Gesamtgewicht von Mikrokapsel und Inhalt, 1 bis 50 Gew.-%, vorzugsweise 1 bis 30 Gew.-%, besonders bevorzugt 2 bis 20 Gew.-%. Auch eine Kapselwand, die 50 Gew.-% des Gesamtgewichts der Mikrokapsel ausmacht, läßt sich noch in einer Waschflotte beim Waschvorgang auflösen. Je dünner die Kapselwand ist, desto eher erfolgt die Auflösung der Kapselwand beim Waschprozess.

Der Kern der Mikrokapseln enthält ein in Wasser emulgierbares Öl. Dieses Öl ist das Löse- oder Verdünnungsmittel für die bei der Polymerisation eingesetzten Monomermischungen (a) und gegebenenfalls (b) und/oder (c) und/oder (d). Es bildet die Ölphase der bei der Polymerisation vorliegenden Öl-in-Wasser-Emulsion.

Als Ölphase dient vorzugsweise das Bleichhilfsmittel, das gemäß einer Ausführungsform der Erfindung hydrophob und bei Raumtemperatur flüssig ist und somit ein in Wasser emulgierbares Öl bildet. Vorzugsweise handelt es sich bei dem Bleichhilfsmittel um ein bei der Polymerisationtemperatur flüssiges Öl, das bei dieser Temperatur nur mäßig oder nicht in Wasser löslich ist und eine Emulsion bildet. Dabei ist die Wasserunlöslichkeit des Bleichhilfsmittels derart, daß der Verteilungskoeffizient Log₁₀P_{ow} des Mittels zwischen Octanol und Wasser über 0,5, vorzugsweise über 1,0 beträgt. Bildet das Bleichhilfsmittel allein kein bei der Polymerisationstemperatur, beziehungsweise bei Raumtemperatur flüssiges in Wasser emulgierbares Öl, so kann die Löslichkeit in der wäßrigen Phase verringert werden, beispielsweise durch Zufügen von Elektrolyten, wie Salzen. Beispiele dafür sind Alkalisulfate, insbesondere Natriumsulfat, sowie die entsprechenden Silikate oder Phosphate. Ebenso kann zur Erhöhung der Hydrophobizität ein Öl beigefügt werden, in dem das Bleichhilfsmittel gelöst oder dispergiert wird. Auch bei Verwendung von festen Bleichhilfsmitteln wird ein Öl als Löse- oder Dispergiermittel zugefügt.

Als Ölphase sind prinzipiell alle Stoffe einsetzbar, die sich in Wasser als Flüssigkeiten bei Temperaturen zwischen ihrem Schmelzpunkt und dem Siedepunkt von Wasser emulgieren lassen. Zu solchen Stoffen gehören alle Arten von Ölen, wie Pflanzenöle, tierische Öle, Mineralöle, Paraffine, Chlorparaffine, Fluorkohlenwasserstoffe und andere synthetische Öle. Typische Beispiele sind Sonnenblumenöl, Rapsöl, Olivenöl, Erdnußöl, Sojaöl, Kerosin, Benzol, Toluol, Butan, Pentan, Hexan, Cyclohexan, Chloroform, Tetrachlorkohlenstoff, chlorierte Diphenyle und Silikonöle. Es können auch Öle mit hohem Siedepunkt als Kernmaterial dienen, z.B. Dibutylphthalat, Diisohexylphthalat, Dioctylphthalat, Alkylnaphthaline, Dodecylbenzol, Terphenyl und partiell hydrierte Terphenyle. Außer den genannten überwiegend niedrigmolekularen öligen Stoffen können auch Polymere als Kern der Mikrokapseln beziehungsweise als Ölphase der Öl-in-Wasser-Emulsion bei der Polymerisation eingesetzt werden, sofern sich die Polymerisate in Wasser emulgieren lassen. Diese Voraussetzung ist im allgemeinen dann erfüllt, wenn die Glastemperatur der Polymeren unterhalb der Temperatur liegt, bei der die Polymerisate in Wasser emulgiert werden. Beispiele für solche Polymerisate sind Acrylsäureester, die sich von einwertigen C₁- bis C₂₀-Alkoholen ableiten, Ester der Methacrylsäure, die sich von einwertigen C₃- bis C₂₀-Alkoholen ableiten, Copolymerisate von Styrol und Styrolderivaten, wobei als Comonomere die genannten Alkylester der Acrylsäure oder Methacrylsäure verwendet werden, Polyester, oligomere Polyolefine auf Basis Ethylen, Propylen, Butylen oder Isobutylen, Polyamide und Polycarbonate mit hydrophobem Charakter. Geeignet sind beispielsweise Polybutylacrylat, Polyethylhexylacrylat, Poly(styrol-co-n-butylacrylat) und kaltpolymerisiertes Poly(styrol-co-butadien). Als Ölphase können auch Mischungen mehrerer Öle bzw. Mischungen aus Ölen und den in Wasser emulgierbaren Polymerisaten verwendet werden. Die Ölphase kann zudem die vorstehend beschriebenen Elektrolyte zur Erhöhung der Hydrophobizität enthalten.

Die Ölphase, die die Monomeren und Bleichshilfmittel enthält oder aus ihnen besteht, ist zu 20 bis 65, vorzugsweise 30 bis 60 Gew.-% am Aufbau der Öl-in-Wasser-Emulsion beteiligt, die der Polymerisation unterworfen wird. Zur Herstellung der erfindungsgemäßen Mikrokapseln benötigt man eine stabile Öl-in-Wasser-Emulsion. Um die Emulsionen zu stabilisieren, verwendet man Emulgatoren. Bevorzugte Emulgatoren für diesen Zweck sind wasserlösliche Polymere, die die Oberflächenspannung des Wassers von 73 mN/m üblicherweise auf 40 bis 70 mN/m senken und somit die Ausbildung geschlossener Kapselwände gewährleisten. Mit Hilfe von hochscherenden Rühraggregaten lassen sich mit diesen Polymeren Mikrokapseln mit Teilchengrößen von etwa 0,5 bis 100, vorzugsweise 1 bis 50, insbesondere 2 bis 20 µm Durchmesser herstellen. Mit weniger stark scherenden Rührern sind auch Mikrokapseln bis zu einem Durchmesser von 1000 µm herstellbar. Über den Grad der Dispergierung läßt sich die Teilchengröße gezielt steuern.

Ebenfalls zur Stabilisierung der Öl-in-Wasser-Emulsion bzw. der bei der Polymerisation entstehenden Öl-in-Wasser-Suspension setzt man Schutzkolloide ein. Bevorzugte Schutzkolloide sind Cellulosederivate wie Hydroxyethylcellulose, Carboxymethylcellulose und Methylcellulose, Polyvinylpyrrolidon und Copolymere des N-Vinylpyrrolidons, Polyvinylalkohol und partiell hydrolysierte Polyvinylacetate. Daneben sind auch Gelatine, Gummi arabicum, Xanthan, Natriumalginat, Pektine, teilhydrolysierte Stärken und Kasein einsetzbar. Die Schutzkolloide werden entweder allein oder auch in Form von Mischungen aus verschiedenen Schutzkolloiden in Mengen von 0,1 bis 10, vorzugsweise von 0,5 bis 5 Gew.-% eingesetzt, bezogen auf die Wasserphase der Emulsion.

Um die Stabilität der Emulsionen zu verbessern, können auch ionische Emulgatoren verwendet werden. Besonders wichtig kann hierbei die Mitverwendung ionischer Emulgatoren bei einem hohen Gehalt an Mikrokapseln in der Dispersion sein, weil es ohne einen zusätzlichen ionischen Stabilisator leicht zur Bildung von agglomerierten Mikrokapseln kommen kann. Als ionische Emulgatoren eignen sich vorzugsweise Polyacrylsäure, Polymethacrylsäure, Copolymerisate aus Acrylsäure und Methacrylsäure, sulfonsäuregruppenhaltige, wasserlösliche Polymere mit einem Gehalt an Sulfoethylacrylat, Sulfoethylmethacrylat oder Sulfopropylmethacrylat sowie Polymerisate von N-(Sulfoethyl)-maleinimid, 2-Acrylamido-2-alkylsulfonsäuren, Styrolsulfonsäure und Formaldehyd sowie Kondensate aus Phenolsulfonsäure und Formaldehyd. Die ionischen Emulgatoren werden in der Regel in Mengen von 0,1 bis 10 Gew.% bezogen auf die Wasserphase der Emulsion, zugesetzt. Die als Emulgatoren verwendeten Polymerisate von monoethylenisch ungesättigten Carbonsäuren oder monoethylenisch ungesättigten Sulfonsäuren haben mittlere Molmassen von 500 bis 1 000 000, vorzugsweise 1000 bis 500 000.

Um das Molekulargewicht der Polymerisate zu regeln, aus dem die Schale besteht, kann man bei der Polymerisation üblicherweise in Betracht kommende Molekulargewichtsregler oder Polymerkettenüberträger verwenden. Hierbei handelt es sich um öllösliche Verbindungen. Geeignete Verbindungen dieser Art sind beispielsweise Mercaptane, wie Mercaptoethanol, Mercaptopropanol, Mercaptobutanole, n-Dodecylmercaptan, Mercaptobernsteinsäure, Mercaptopropionsäure, Mercaptoglycerin, Mercaptoessigsäure, Ester der Thioglykolsäure, wie Hexylthioglykolat, Mercaptoalkylsilane wie 3-Mercaptopropyltrimethoxysilan und 3-Mercaptopropylmethyldimethoxysilan, Ether wie Dioxan, Tetrahydrofuran, Tetrahydrofurfurylalkohol, Essigsäuretetrahydrofurfurylester, Alkohole wie Isopropanol, n-Butanol und n-Decanol und aromatische Kohlenwasserstoffe wie Isopropylbenzol.

Als Regler verwendet man vorzugsweise Ester der Thioglykolsäure wie Ethylhexylthioglykolat und Hexylthioglykolat sowie Dodecylmercaptan. Die Mengen an Regler betragen, sofern Regler bei der Polymerisation eingesetzt werden, vorzugsweise 0,005 bis 1,5 Gew.-% bezogen auf die Gesamtmenge an Monomeren.

Die Polymerisation erfolgt in Gegenwart von Radikale bildenden Polymerisationsinitiatoren. Hierfür können alle üblichen Peroxo- und Azoverbindungen in den üblicherweise eingesetzten Mengen, z.B. von 0,1 bis 5 Gew.-%, bezogen auf das Gewicht der Monomeren, verwendet werden. Bevorzugt sind solche Polymerisationsinitiatoren, die in der Ölphase oder in den Monomeren löslich sind. Beispiele hierfür sind t-Butylperoxyneodecanoat, t-Amylperoxypivalat, Dilauroylperoxid, t-Amylperoxy-2-ethylhexanoat, 2,2'-Azobis-(2,4-dimethyl(valeronitril), 2,2'-Azobis-(2-methylbutyronitril), Dibenzoylperoxid, t-Butylper-2-ethylhexanoat, Di-t-butylhydroperoxid, 2,5-Dimethyl-2,5-di(t-butylperoxy)hexan und Cumolhydroperoxid. Bevorzugt eingesetzte Radikalstarter sind Di(3,5,5-trimethylhexanoyl)-peroxid, 4,4'-Azobisisobutyronitril, t-Butylperpivalat und Dimethyl-2,2'-azobisisobutyrat. Diese Initiatoren weisen in einem Temperaturbereich von 30 bis 100°C eine Halbwertzeit von 10 Stunden auf. Man kann auch wasserlösliche Polymerisationsinitiatoren einsetzen oder Kombinationen aus öllöslichen und wasserlöslichen Polymerisationsinitiatoren verwenden.

Die Polymerisation findet in der das Bleichhilfsmittel enthaltenden beziehungsweise aus diesem bestehenden Ölphase einer stabilen Öl-in-Wasser-Emulsion statt. Diese Emulsion erhält man, indem man beispielsweise zunächst die Monomeren und den Polymerisationsinitiator sowie gegebenenfalls einen Polymerisationsregler und einen Emulgator in dem Öl löst und die so erhaltene Lösung in Wasser emulgiert. Dabei kann der wäßrigen Phase gegebenenfalls ein Elektrolyt zugesetzt werden. Die Ölphase enthält das Bleichhilfsmittel und gegebenenfalls zusätzlichen Elektrolyten und/oder zusätzliches Öl. Man kann jedoch auch zunächst mindestens ein Öl in Wasser emulgieren und dann zur Emulsion die Monomeren und den Radikalstarter sowie die gegebenenfalls noch mit zu verwendenden anderen Hilfsstoffe wie Schutzkolloide oder Polymerisationsregler zugeben. Bei einer anderen Verfahrensvariante kann man auch das Öl und die Monomeren in Wasser emulgieren und anschließend nur noch den Polymerisationsinitiator zugeben. Die Ölphase kann dabei in allen Fällen gegebenenfalls noch vorhandene Inhaltsstoffe, z.B. Bleichhilfsmittel enthalten. Da die Ölphase in der Emulsion möglichst vollständig mikroverkapselt werden soll, werden vorzugsweise nur solche Öle eingesetzt, deren Löslichkeit in Wasser nicht allzu groß ist. Die Löslichkeit sollte vorzugsweise 5 Gew.-% nicht übersteigen. Für eine vollständige Mikroverkapselung der Ölphase der Öl-in-Wasser-Emulsion ist es zweckmäßig, die Monomeren entsprechend ihrer Löslichkeit im eingesetzten Öl auszuwählen. Während die Monomeren im Öl im wesentlichen löslich sind, entstehen daraus bei der Polymerisation in den einzelnen Öltröpfchen unlösliche Polymere, die weder in der Ölphase noch in der Wasserphase der Öl-in-Wasser-Emulsion löslich sind und so an die Grenzfläche zwischen den Öltröpfchen und der Wasserphase wandern und so das Wandmaterial bilden, das schließlich den öligen Kern der Mikrokapseln umhüllt. Die Polymerisation der Öl-in-Wasser-Emulsion wird üblicherweise bei 20 bis 100°C, vorzugsweise bei 40 bis 90°C durchgeführt. Üblicherweise wird die Polymerisation bei Normaldruck vorgenommen, kann jedoch auch bei vermindertem oder erhöhtem Druck erfolgen, z.B. in dem Bereich von 0,5 bis 20 bar. Verfahrenstechnisch geht man in der Regel so vor, daß man eine Mischung aus Wasser mit gegebenenfalls darin enthaltenen Elektrolyten, Schutzkolloiden und/oder Emulgatoren, öligen Kernmaterialien und Monomeren mit einem schnellaufenden Dispergator auf die gewünschte Größe emulgiert und die stabile Emulsion unter Rühren auf die Zerfallstemperatur der Radikalstarter erhitzt. Die Geschwindigkeit der Polymerisation kann dabei durch die Wahl der Temperatur und der Menge des Radikalstarters in bekannter Weise gesteuert werden. Nach Erreichen der Polymerisationstemperatur setzt man die Polymerisation zweckmäßigerweise noch für eine Zeit von 2 bis 6 Stunden fort, um den Umsatz der Monomeren zu vervollständigen.

Besonders bevorzugt ist eine Arbeitsweise, bei der man während der Polymerisation die Temperatur des polymerisierenden Reaktionsgemisches kontinuierlich oder periodisch erhöht. Dies geschieht mit Hilfe eines Programms mit ansteigender Temperatur. Die gesamte Polymerisationszeit kann zu diesem Zweck in mindestens zwei Perioden unterteilt werden. Die erste Polymerisationsperiode ist durch einen langsamen Zerfall der Radikalstarter gekennzeichnet. In der zweiten Polymerisationsperiode und gegebenenfalls in weiteren Polymerisationsperioden wird die Temperatur der Reaktionsmischung erhöht, um den Zerfall der Radikalstarter zu beschleunigen. Die Temperatur kann in einem Schritt oder in mehreren Schritten oder kontinuierlich in linearer oder in nichtlinearer Weise erhöht werden. Die Temperaturdifferenz zwischen Beginn der Polymerisation und dem Ende der Polymerisation kann bis zu 50°C betragen. Im allgemeinen beträgt diese Differenz 3 bis 40, vorzugsweise 3 bis 30°C. Bisher kann keine Erklärung dafür gegeben werden, weshalb die Anwendung eines Programms mit ansteigender Temperatur während der Polymerisation zu verbesserten Mikrokapseln gegenüber einer Polymerisation bei annähernd konstanter Temperatur führt. Es wird jedoch vermutet, daß die Ursache dafür in dem sehr komplexen Prozeß der Polymerisation mit gleichzeitiger Phasentrennung innerhalb der Mikrokapseln zu suchen ist.

Abhängig vom jeweils verwendeten System aus Monomeren und Ölphase können sich verschiedene, optimale Temperaturprogramme ergeben, die nicht vorhergesagt werden, sondern mit Hilfe von Versuchen ermittelt werden müssen. Bei Anwendung eines Programms mit ansteigender Temperatur während der Polymerisation wird ein Radikalstarter in der ersten Polymerisationsperiode bei niedriger Polymerisationstemperatur nur langsam zerfallen. Weniger Radikale pro Zeiteinheit bedeuten aber den Start von nur wenigen Polymerketten, die deshalb ein hohes Molgewicht erreichen können. Ketten mit hohem Molekulargewicht sollten sehr schnell eine Phasentrennung vom öligen Kern zeigen. Dieses Verhalten einer schnellen Phasentrennung kann ungünstig für eine gleichmäßige Abscheidung des Wandmaterials der Mikrokapseln sein. Deshalb erscheint in vielen Fällen eine Regelung des Molekulargewichts durch Mitverwendung von Molekulargewichtsreglern oder Kettenüberträgern sinnvoll.

Durch das erfindungsgemäße Verfahren können Mikrokapseln mit einer sehr gleichmäßigen Größe, d.h. einer geringen Größenverteilung hergestellt werden. Somit sind Mikrokapseln mit einem definierten Durchmesser zugänglich. Zudem ist es durch die in situ Erzeugung der Mikrokapseln um das einzuschließende Bleichhilfsmittel herum möglich, Kapseln mit sehr gleichmäßiger und definierter Wandstärke zu erhalten. Durch die gleichmäßige und definierte Wandstärke ist es möglich, das Freisetzungsverhalten beziehungsweise das Auflösungsverhalten der Mikrokapseln in einer Waschflotte gezielt einzustellen. Das erfindungsgemäße Verfahren erlaubt die Verkapselung von Flüssigkeiten wie von Feststoffen und in Flüssigkeiten dispergierten Feststoffen, wobei über den Grad der Dispergierung während der Polymerisation die Teilchengröße der Mikrokapseln einfach eingestellt werden kann. Es war dabei unerwartet, daß die erfindungsgemäßen Mikrokapseln auch bei Verwendung von Bleichhilfsmitteln im Kern der Mikrokapsel zugänglich sind, obwohl die Bleichhilfsmittel, insbesondere die Bleichaktivatoren als Polymerisationsregler wirken können. Gegenüber den bekannten Verfahren sind somit Mikrokapseln zugänglich, die einen wesentlich einheitlicheren und definierteren Aufbau besitzen und somit ein einheitlicheres Auflösungsverhalten beispielsweise in Waschflotten zeigen. Durch die sehr dünnwandige und sehr dichte Verkapselung kann der Materialbedarf für die Mikrokapseln zudem sehr gering gehalten werden, so daß der Anteil am gewünschten Wirkstoff, hier des Bleichhilfsmittels, in den Mikrokapseln sehr hoch ist.

Zusätzlich zu bekannten thermischen Methoden zur Öffnung bzw. Zerstörung der Schale der Mikrokapseln kann vorzugsweise bei den erfindungsgemäßen Mikrokapseln die Zerstörung der Schale der Mikrokapseln durch Einwirkung von wäßrigen Basen vorgenommen werden.

Die erfindungsgemäßen Mikrokapseln, die in ihrem Kern ein Bleichhilfsmittel enthalten, können auch zu einem System hinzugeführt werden, das schon einen alkalischen pH-Wert aufweist, beispielsweise Waschlaugen oder Reinigungsmittellaugen. Die erfindungsgemäßen Mikrokapseln fallen bei dem erfindungsgemäßen Herstellverfahren in Form von Dispersionen mit einem Feststoffanteil von etwa 65-20, vorzugsweise 60-30 Gew.-% an. Diese Dispersionen können direkt angewendet werden, z.B. in flüssigen Wasch- und Reinigungsmitteln, oder man isoliert die Mikrokapseln aus den Dispersionen, beispielsweise dadurch, daß man die Dispersionen einer Sprühtrocknung und gegebenenfalls einer Agglomeration zu einem Granulat unterwirft.

Die in den Beispielen angegebenen K-Werte wurden nach H. Fikentscher, Cellulose-Chemie, Band 13, 58-64 und 71-74 (1932) in 1%iger wäßriger Lösung bei einer Temperatur von 25°C bestimmt.

### Bleichhilfsmittel

Wie vorstehend angegeben, kann erfindunggemäß jedes Bleichhilfsmittel verwendet werden, das bei der Emulsionpolymerisation in die Form eines hydrophoben Öls gebracht werden kann.

Somit muß das Bleichhilfsmittel entweder allein oder in Mischung mit weiteren Komponenten eine Phasentrennung beim Einbringen in eine wäßrige Umgebung eingehen. Vorzugsweise ist das Bleichhilfsmittel bei Raumtemperatur beziehungsweise bei der Polymerisationtemperatur eine ausreichend hydrophobe Flüssigkeit, so daß es direkt als Ölphase bei der Emulsionspolymerisation eingesetzt werden kann und als Reinsubstanz in den Mikrokapseln enthalten ist. In diesem Fall bildet also das Bleichhilfsmittel die in Wasser emulgierbare Ölphase. Ist das Bleichhilfsmittel vollständig oder teilweise wassermischbar, das heißt, weist es eine zu geringe Hydrophobizität auf, so kann oft die Phasentrennung durch Zusatz von Elektrolyten entweder zum wäßrigen Medium oder zu der Mischung mit dem wäßrigen Medium bewirkt werden. Geeignete Elektrolyten sind beispielsweise Salze, die zur Phasentrennung führen, wie Alkalisulfate, -silikate oder -phosphate, insbesondere Natriumsulfat.

Ist das Bleichhilfsmittel bei Raumtemperatur beziehungsweise Polymerisationstemperatur nicht flüssig, sondern liegt als Feststoff vor, so kann es in einem in Wasser emulgierbaren Öl gelöst oder dispergiert werden. Geeignete Öle sind vorstehend beschrieben. Auch eine Kombination von Elektrolyt und zusätzlichem Öl zur Bildung der gewünschten hydrophoben emulgierbaren Ölkomponente ist möglich.

Das Bleichhilfsmittel ist gemäß einer Ausführungform der Erfindung ein Bleichmittel, ein Bleichaktivator oder ein Bleichkatalysator.

Geeignete Bleichmittel sind organische Persäuren.

Bleichaktivatoren sind solche Verbindungen, die mit Perhydroxylanionen organische Persäuren bilden können, die dann als Bleichmittel wirken. Bleichkatalysatoren sind solche Verbindungen, die die Bildung von Persäuren beschleunigen oder in einem katalytischen Prozeß reaktive Zwischenstufen bilden, die als bleichendes Agens wirken.

Geeignete bekannte Bleichaktivatoren sind solche der allgemeinen Formeln (I), (II), (III).

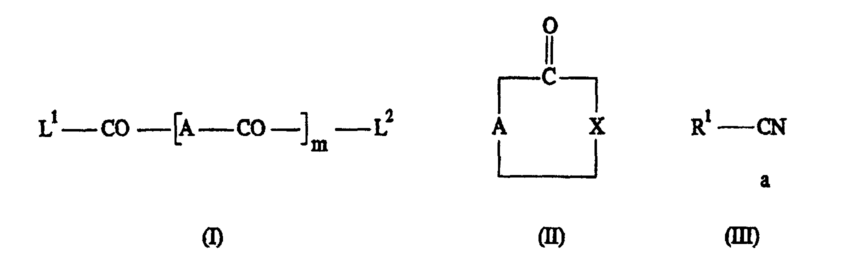

Bei den Strukturen (II) handelt es sich um cyclische Anhydride 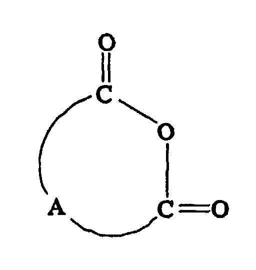 oder Anthranilderivate

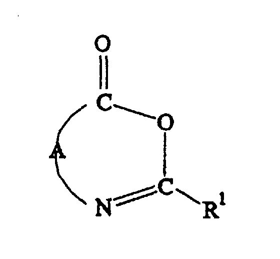

Geeignete bekannte Bleichmittel (Persäuren) haben die allgemeinen Formeln (IV) oder (V).

*R*¹-*CO*⁻₃*M*⁺ (IV)

M⁺⁻OOCO―A―COOO⁻M⁺ (V)

Dabei steht L¹ für
(a) einen Carbonesterrest der Formel 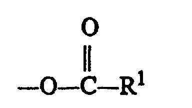
(b) einen Carbonamidrest der Formel 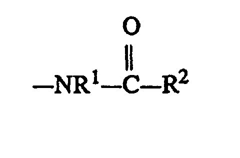
(c) einen Phenolatrest der Formel 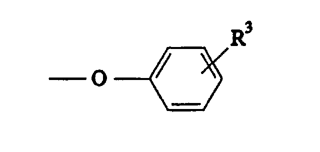
(d) einen Vinyloxyrest der Formel

   ―O―CR¹ ̿CHR²
(e) einen Sulfonamidrest der Formel 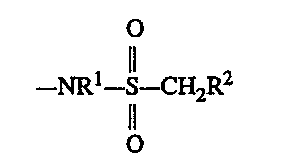
(f) einen Imidazolrest der Formel 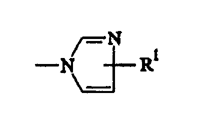
(g) einen Amidolactamrest der Formel 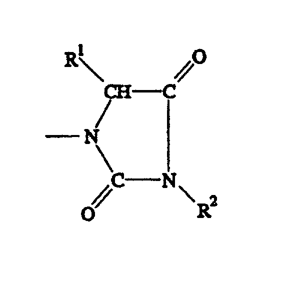
(h) einen cyclischen Carbamatrest der Formel 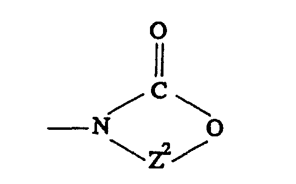
(j) einen Lactonoxyrest der Formel 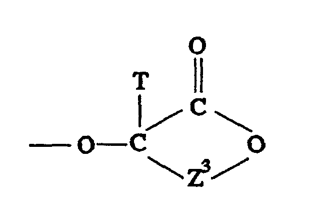
(k) einen Lactamrest der Formel 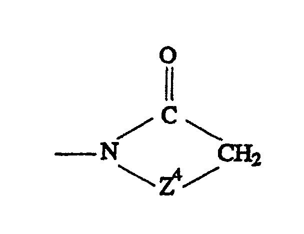 und
(l) eine Oxim-Gruppierung

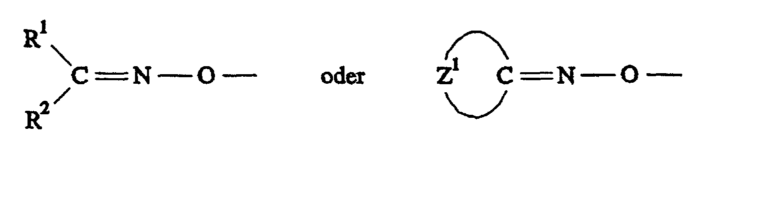

- L²: steht für einen Rest L¹ oder eine Gruppierung R¹, wobei
- R¹ und R²: Wasserstoff, C₁- bis C₃₀-Alkyl, C₂- bis C₃₀-Alkenyl, C₅- bis C₁₈-Cycloalkyl, C₇- bis C₁₈-Aralkyl oder C₆ bis C₁₈-Aryl oder -Heteroaryl, wobei aliphatische Reste zusätzlich durch ein bis fünf Hydroxylgruppen, C₁-bis C₄-Alkoxygruppen, Aminogruppen, C₁- bis C₄-Alkylaminogruppen, Di-C₁- bis C₄-alkylaminogruppen, Chloratome, Bromatome, Nitrogruppen, Cyanogruppen, Carboxylgruppen, Suflogruppen, Carboxy-C₁- bis C₄-alkylgruppen, Carbamoylgruppen oder Phenyl-, Tolyl- oder Benzylreste funktionalisiert, wobei aromatische, cycloaliphatische und heteroaromatische Struktureinheiten ebenfalls durch die genannten Reste substituiert sein können, oder durch ein bis acht nicht benachbarte Sauerstoffatome, Aminogruppen, C₁-bis C₄-Alkylaminogruppen oder Carbonylgruppen unterbrochen sein können, bedeuten und 1,3-, 1,4-, 1,5-, 1,6-, 1,7-, oder 1,8-Alkylengruppen mit 3 bis 30 C-Atomen, welche zusätzlich durch ein bis fünf Hydroxylgruppen, C₁- bis C₄-Alkylaminogruppen, Di-C₁- bis C₄-alkylaminogruppen, Chloratome, Bromatome, Nitrogruppen, Cyanogruppen, Carboxylgruppen, Carbamoylgruppen oder Phenyl-, Tolyl- oder Benzylreste funktionalisiert, wobei aromatische Kerne ihrerseits ebenfalls durch die genannten Reste substituiert sein können, oder durch ein oder zwei nicht benachbarte Sauerstoffatome, Aminogruppen, C₁- bis C₄-Alkylaminogruppen oder Carbonylgruppen unterbrochen sein können,
- R³: Wasserstoff, eine Carbonsäuregruppe, eine Sulfonsäuregruppe, eine Phosphonsäuregruppe oder deren Alkalimetall- oder Ammoniumsalz bedeutet,
- T: Wasserstoff oder C₁- bis C₄-Alkyl bedeuten und
- Z² bis Z⁴: 1,2-, 1,3-, 1,4- oder 1,5-Alkylengruppen mit 2 bis 20 C-Atomen, welche zusätzlich durch ein bis drei Hydroxylgruppen, C₁- bis C₄-Alkoxygruppen, Aminogruppen, C₁- bis C₄-Alkylaminogruppen, Di-C₁- bis C₄-alkylaminogruppen, Chloratome, Bromatome, Nitrogruppen, Cyanogruppen, Carboxylgruppen, Sulfogruppen, Carboxy-C₁- bis C₄-alkylgruppen, Carbamoylgruppen oder Phenyl-, Tolyl- oder Benzylreste funktionalisiert, wobei aromatische Kerne ihrerseits ebenfalls durch die genannten Reste substituiert sein können, oder durch ein oder zwei nicht benachbarte Sauerstoffatome, Aminogruppen, C₁- bis C₄-Alkylaminogruppen oder Carbonylgruppen unterbrochen sein können, bezeichnet,
- A: eine chemische Bindung oder eine C₁- bis C₁₈-Alkylengruppe, eine C₂- bis C₁₈-Alkenylengruppe, eine C₅- bis C₃₂-Cycloalkylengruppe, eine C₇- bis C₃₀-Aralkylengruppe oder eine C₆- bis C₁₈-Arylengruppe oder -Heteroarylengruppe bezeichnet, wobei aliphatische Struktureinheiten zusätzlich durch ein bis fünf Hydroxylgruppen, C₁- bis C₄-Alkoxygruppen, Aminogruppen, C₁- bis C₄-Alkylaminogruppen, Di-C₁- bis C₄-Alkylaminogruppen, Chloratome, Bromatome, Nitrogruppen, Cyanogruppen, Carboxylgruppen, Sulfogruppen, Carboxy-C₁- bis C₄-alkygruppen, Carbamoylgruppen oder Phenyl-, Tolyl- oder Benzylreste funktionalisiert, wobei aromatische, cycloaliphatische und heteroaromatische Struktureinheiten ebenfalls durch die genannten Reste subsitituiert sein können, oder durch ein bis acht nicht benachbarte Sauerstoffatome, Aminogruppen, C₁- bis C₄-Alkylaminogruppen oder Carbonylgruppen unterbrochen sein können, und
- m: für die Zahl 0 oder 1 steht.

Für die Reste R¹ und R², die gleich oder verschieden sein können, kommen neben Wasserstoff folgende Bedeutungen in Betracht:
als lineare oder verzweigte C₁- bis C₃₀-Alkylgruppen eignen sich beispielsweise Methyl, Ethyl, n-Propyl, iso-Propyl, n-Butyl, iso-Butyl, sek.-Butyl, tert.-Butyl, n-Pentyl, iso-Pentyl, sek.-Pentyl, tert.-Pentyl, neo-Pentyl, n-Hexyl, n-Heptyl, n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl oder n-Eicosyl; bevorzugte werden C₁- C₁₂-Alkylgruppen; insbesondere C₁- bis C₄-Alkylgruppen;
als lineare oder verzweigte C₂- bis C₃₀-Alkenylgruppen kommen beispielsweise Vinyl, Allyl, 2-Methylprop-2-enyl oder der entsprechende von Ölsäure, Linolsäure oder Linolensäure abgeleitete Reste in Frage; bevorzugt werden C₂- bis C₆-Alkenyl- sowie C₁₆- bis C₂₂-Alkenylgruppen;
als C₅- bis C₁₈-Cycloalkylgruppen eignen sich vor allem C₅- bis C₁₀-Cycloalkylgruppen, z.B. Cyclopentyl, Cyclohexyl, 2-, 3- oder 4-Methylcyclohexyl, 2,3-, 2,4-, 2,5- oder 2,6-Dimethylcyclohexyl, Cycloheptyl oder Cyclooctyl;
als C₇- bis C₁₈-Aralkyl-, insbesondere C₇- bis C₁₂-Aralkylgruppen kommen insbesondere alkylsubstituierte Phenylalkylgruppen in Frage, z.B. Benzyl, 2-, 3- oder 4-Methylbenzyl, 2-Phenylethyl, 3-Phenylpropyl, 4-Phenylbutyl, 2-, 3-oder 4-Ethylbenzyl, 3- oder 4-Isopropylbenzyl oder 3- oder 4-Butylbenzyl;
als C₆- bis C₁₈-Arylgruppen eignen sich beispielsweise Phenyl, 2-, 3- oder 4-Biphenylyl, α- oder β-Naphthyl, 2-, 3- oder 4-Methylphenyl, 2-, 3- oder 4-Ethylphenyl, 3- oder 4-Isopropylphenyl, 3- oder 4-Butylphenyl oder 3-oder 4-(2'-Ethylhexyl)phenyl; bevorzugt werden C₆- bis C₁₄-Arylgruppen, insbesondere Phenyl und alkylsubstituiertes Phenyl;
als C₆- bis C₁₈-Heteroarylgruppen kommen insbesondere fünf- oder sechsgliedrige C₆- bis C₁₂-Heteroarylgruppen mit ein oder zwei Heteroatomen aus der Gruppe Stickstoff, Sauerstoff und Schwefel in Frage, Beispiele hierfür sind: 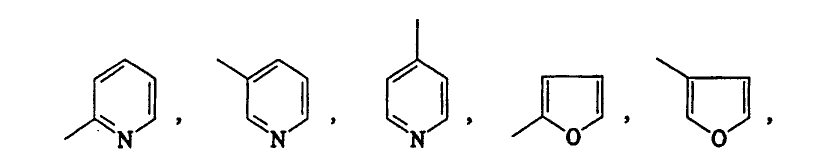 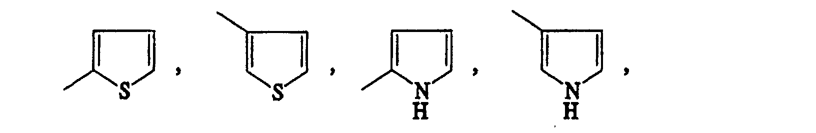 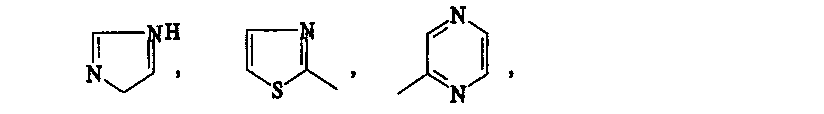 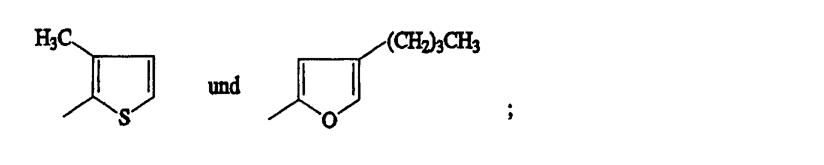
als durch Sauerstoff oder Amino-Gruppierungen, insbesondere NH- oder N(CH₃)-Gruppierungen, unterbrochene aliphatische Reste kommen beispielsweise folgende Strukturen in Betracht:

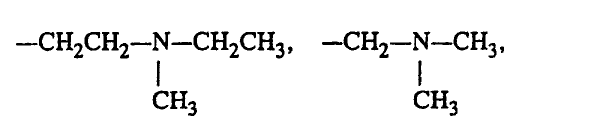

   ―CH₂―O―CH₃, ―CH₂CH₂―O―CH₃, ―CH₂CH₂―O―CH₂CH₃,

   ―CH₂CH₂―O(̵CH₂CH2)̵ₚOH, ―(CH₂)₄―O―CH₃,

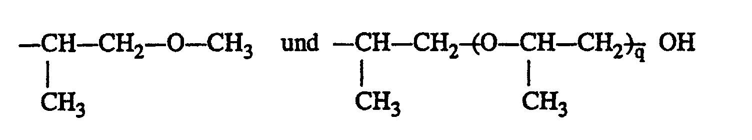

   mit p = 2 bis 8 und q = 2 bis 5.

Die Variable Z¹ in den cyclischen Oxim-Gruppierungen L¹ kann vor allem C₃- bis C₁₂-Alkylengruppierungen der folgenden Strukturen bedeuten:

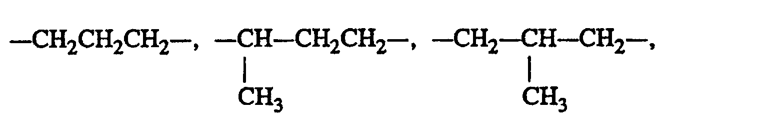

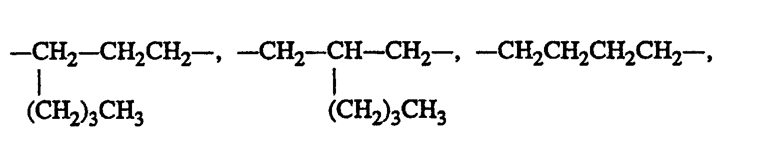

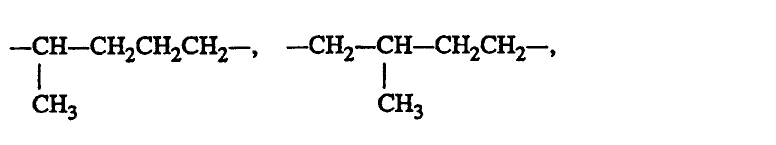

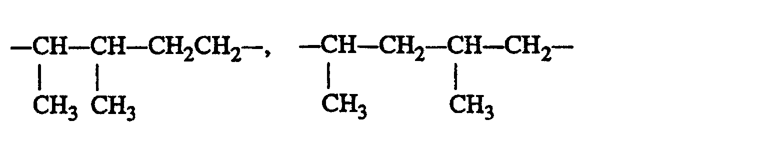

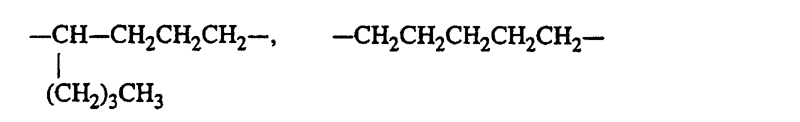

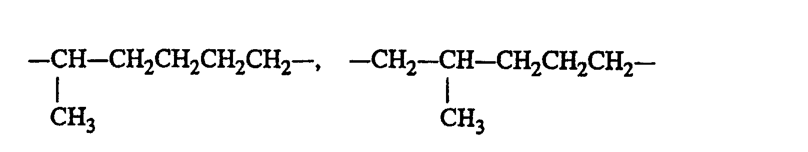

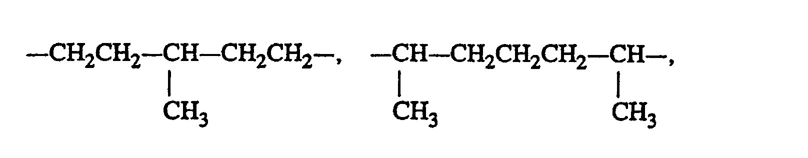

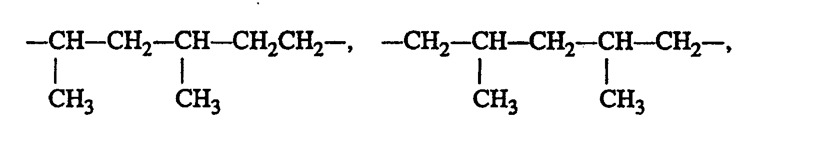

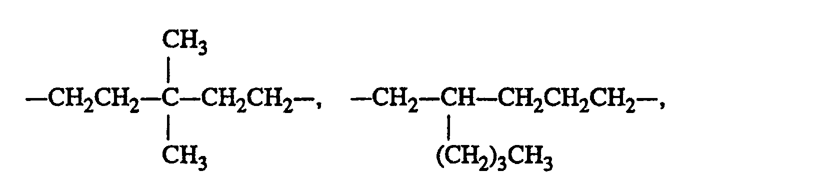

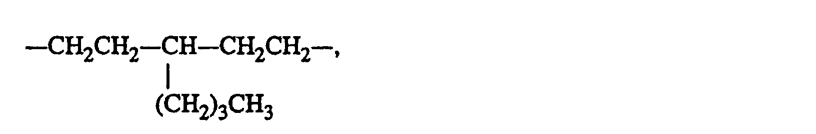

―(CH)₆―, ―(CH₂)₇― oder ―(CH₂)₈―,

wobei die Variable Z¹ wie angegeben funktionalisiert oder unterbrochen sein kann.

Die Variablen Z² bis Z⁴ in den heterocyclischen Systemen (h), (j) und (k) können vor allem C₂- bis C₁₀-Alkylengruppierungen der folgenden Struktur bedeuten: 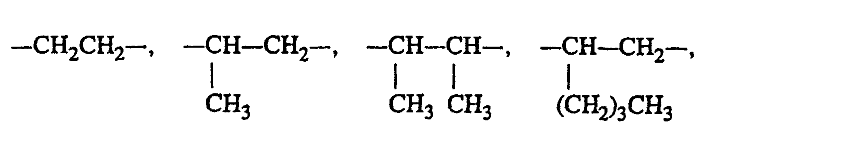 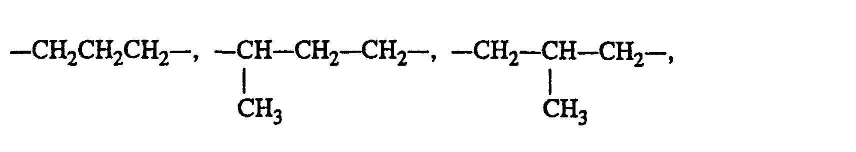 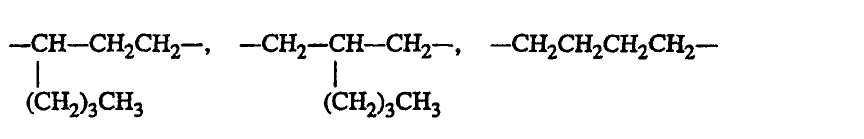 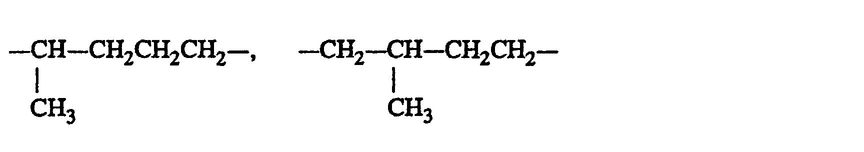 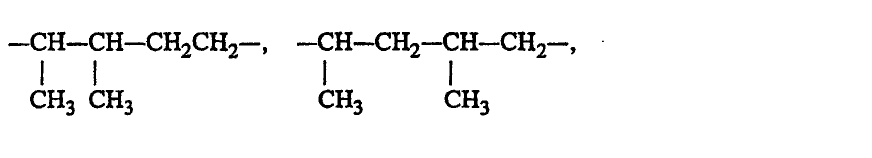 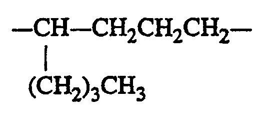 oder

―CH₂CH₂CH₂CH₂CH₂―

wobei bei unsymmetrischen Alkylengruppierungen prinzipiell beide Einbaumöglichkeiten in die Ringe möglich sind. Die Variablen Z² bis Z⁴ können wie angegeben funktionalisiert oder unterbrochen sein.

Als Carbonesterreste (a) für L¹ und/oder L² eignen sich vor allem: 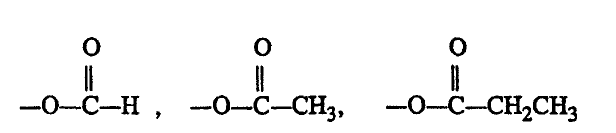 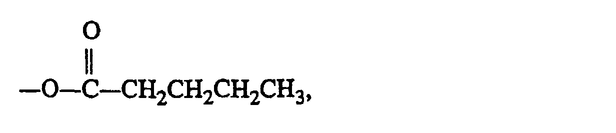 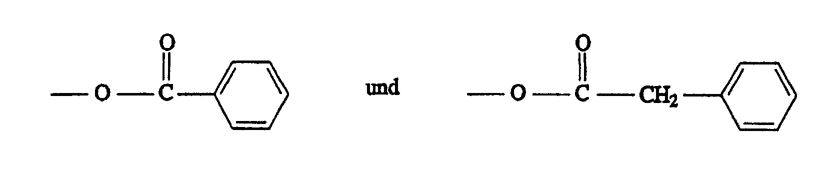 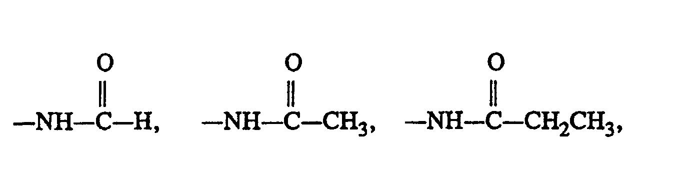 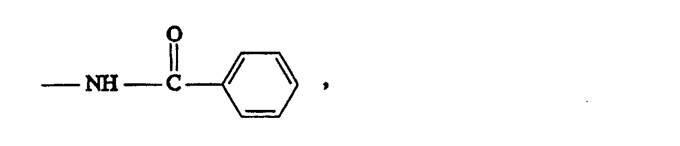 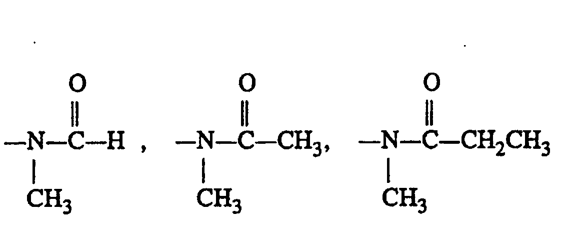 und

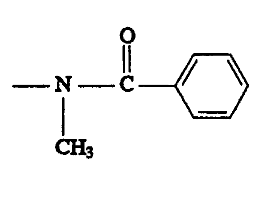

Als Phenolatreste (c) für L¹ und/oder L² eignen sich vor allem: 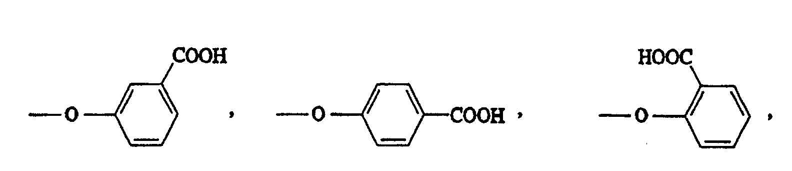 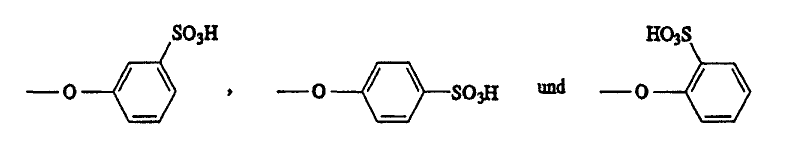 sowie die zugehörigen Natrium- oder Kaliumsalze.

Als Vinyloxyreste (d) für L¹ und/oder L² eignen sich vor allem:

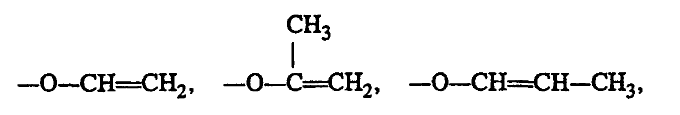

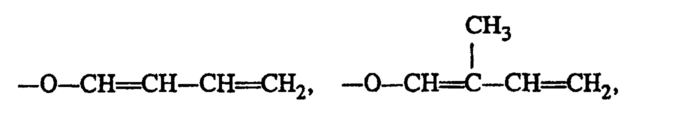

―O―CH=CH―CH=CH―CH₃

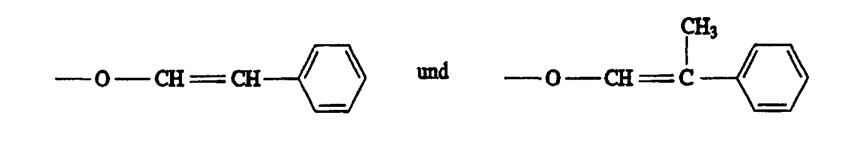

Als Sulfonamidreste (e) für L¹ und/oder L² eignen sich vor allem:

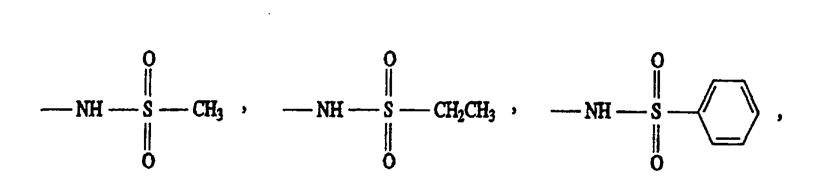

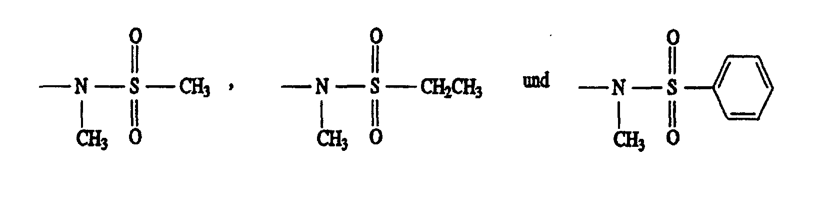

Als Imidazolreste (f) für L¹ und/oder L² eignen sich vor allem:

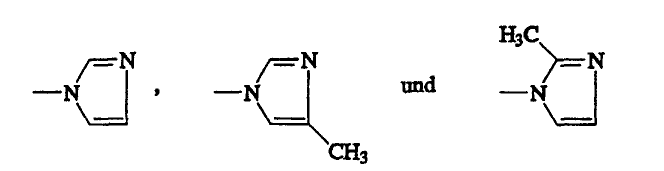

Als Amidolactamreste (g) für L¹ und/oder L² eignen sich vor allem: 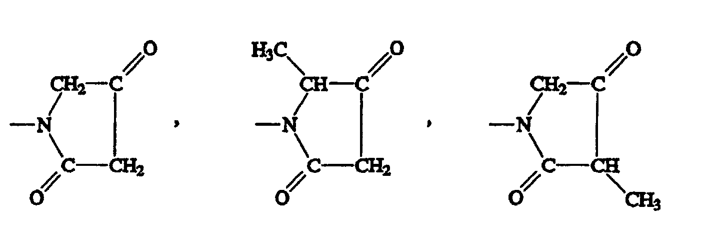 und

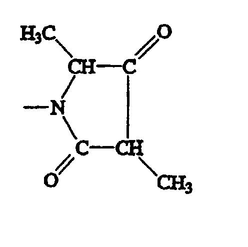

Als cyclische Carbamatreste (h) für L² eignen sich vor allem:

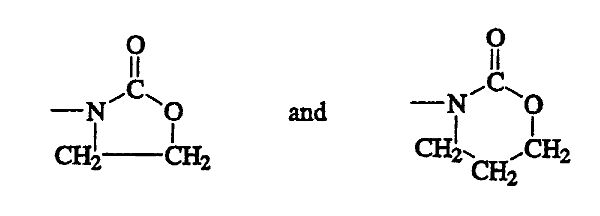

Als Lactonoxyreste (j) für L² eignen sich vor allem:

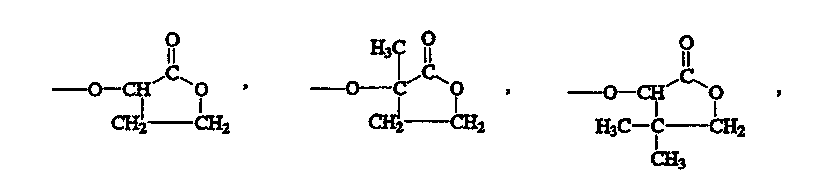

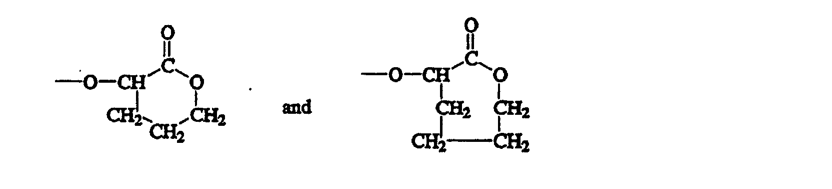

T in der allgemeinen Formel für den Lactonoxyrest (j) bedeutet vorzugsweise Wasserstoff oder Methyl.

Als Lactamreste (k) für L² eignen sich vor allem:

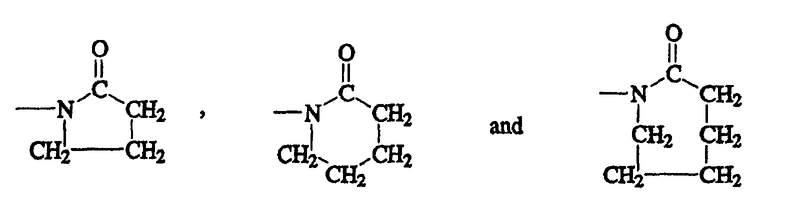

Typische Beispiele für das Brückenglied A sind die folgenden:
- als lineare oder verzweigte C₁- bis C₁₈-Alkylengruppe, insbesondere C₆bis C₁₂-Alkylengruppe, können Methylen, 1,2-Ethylen, 1,1-Ethylen, 1,3-Propylen, 1,2-Propylen,
1,1-Propylen, 2,2-Propylen, 1,4-Butylen, 1,2-Butylen, 2, 3,-Butylen, Pentamethylen, 3-Methyl-1,5-pentylen, Hexamethylen, Heptamethylen, Octamethylen, Nonamethylen, Decamethylen, Undecamethylen, Dodecamethylen, Tetradecamethylen, Hexadecamethylen oder Octadecamethylen auftreten;
als lineare oder verzweigte C₂- bis C₁₈-Alkenylengruppen, insbesondere C₆bis C₁₂-Alkenylengruppen, können Brückenglieder mit ein, zwei oder drei olefinischen Doppelbindungen oder auch acetylenischen Doppelbindungen auftreten, z.B. 1,2-Ethenylen, 1,3-Propenylen, 1,4-But-2-enylen, 1,6-Hex-3-enylen, 1,8-Oct-4-enylen oder 1,12-Dodec-6-enylen;

Als C₅- bis C₃₂-Cycloalkylengruppen, insbesondere C₅- bis C₁₀-Cycloalkylengruppen eignen sich 1,2-, 1,3- oder 1,4-Cyclohexylen, 1,2-, 1,3- oder 1,4-Cycloheptylen, 1,2-, 1,3-, 1,4- oder 1,5-Cyclooctylen oder Gruppierungen der Formel 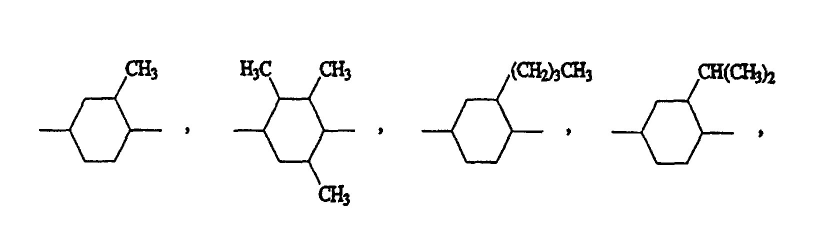 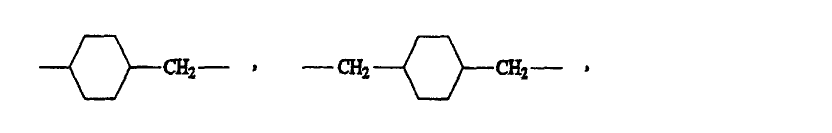 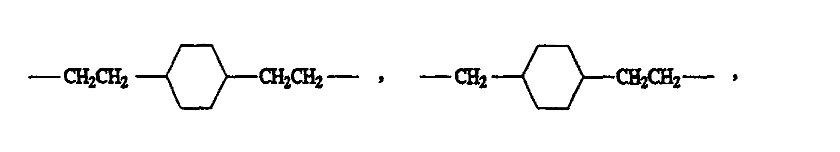 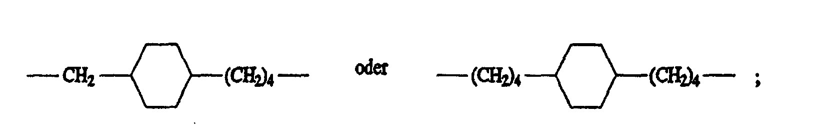 als C₇- bis C₃₀-Aralkylengruppen, insbesondere gegebenenfalls alkylsubstituierte C₇- bis C₂₂-Phenylalkylen- und -Diphenylalkylengruppen kommen in Betracht Gruppierungen der Formel 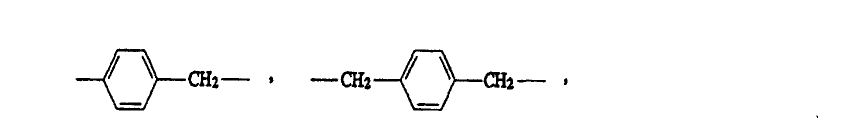 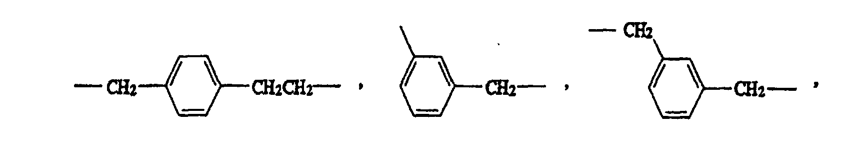 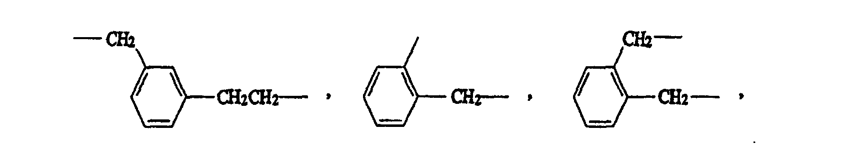 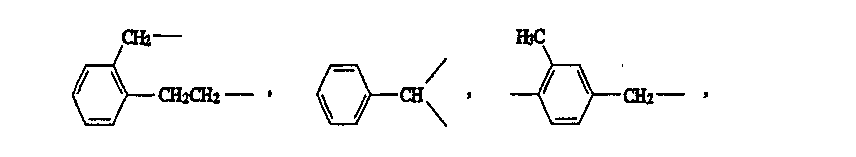 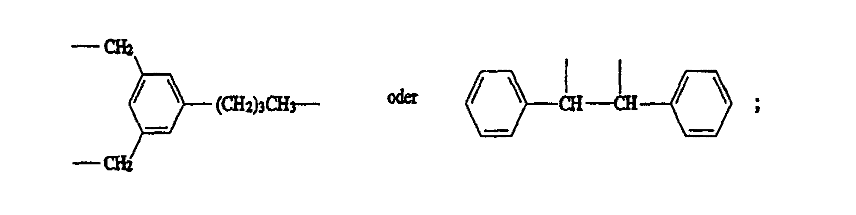 als C₆-C₁₈-Arylengruppen, insbesondere gegebenenfalls alkylsubstituierte Phenylen-, Biphenylyl- oder Naphthylengruppen eignen sich vor allem 1,4-, 1,3-, und 1,2-Phenylen, aber auch Gruppierungen der Formel 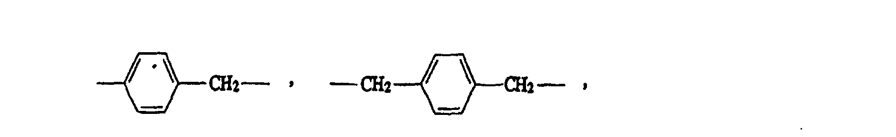 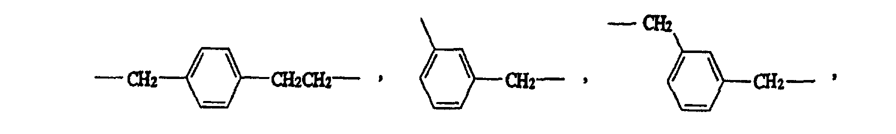 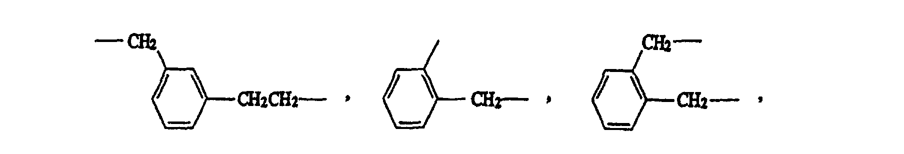 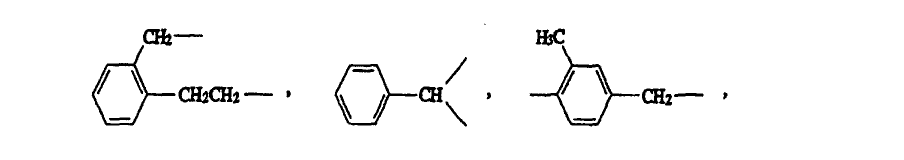 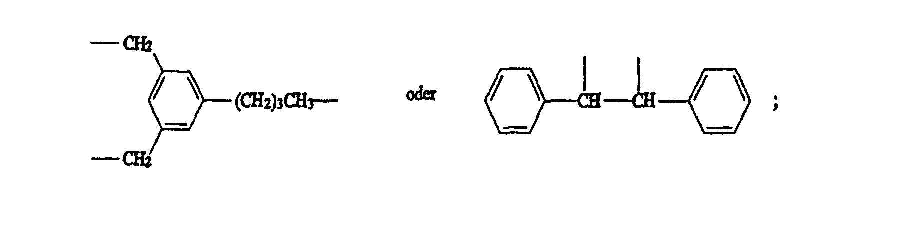 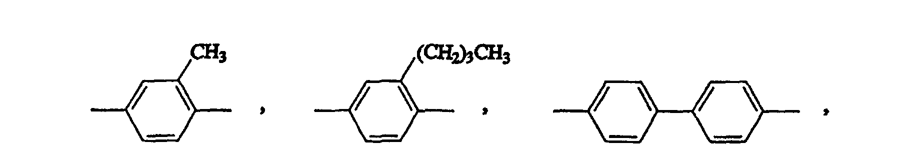 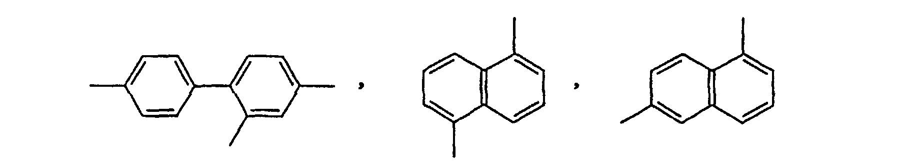 oder 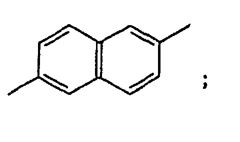 als C₆- bis C₁₈-Heteroarylengruppen, insbesondere fünf- oder sechgliedrige C₆- bis C₁₂-Heteroarylengruppen mit ein oder zwei Heteroatomen aus der Gruppe Stickstoff, Sauerstoff und Schwefel kommen in Betracht Gruppierungen der Formel: 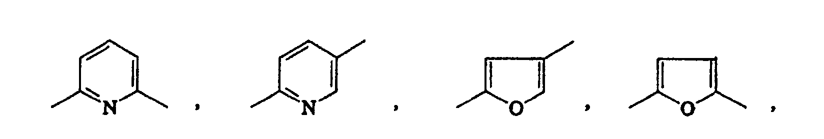 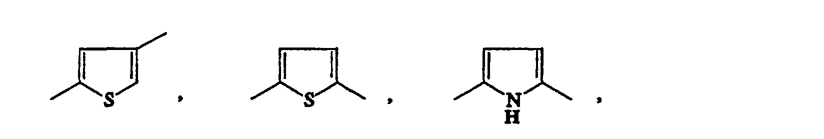 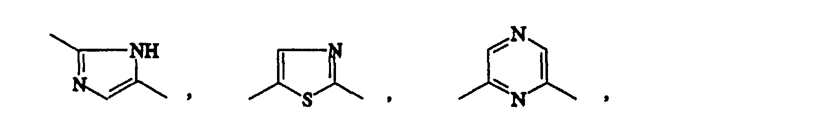 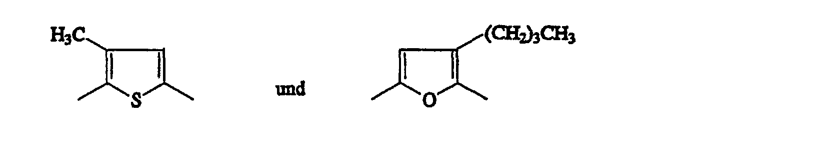 als durch Sauerstoff oder Amino-Gruppierungen, insbesondere NH- oder N(CH₃)-Gruppierungen, unterbrochene Strukturen kommen beispielsweise folgende Strukturen in Betracht:

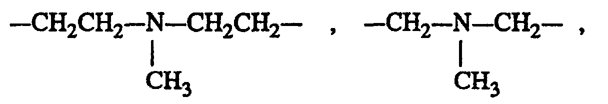

―CH₂―O―CH₂―, ―CH₂CH₂―O―CH₂―,

―CH₂CH₂―O―CH₂CH₂―, ―CH₂CH₂(̵O―CH₂CH₂)̵ₚ,

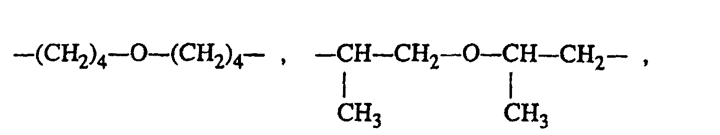

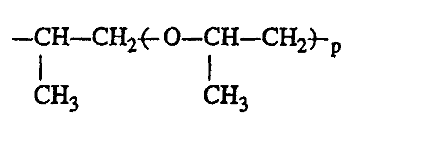

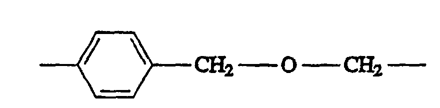

oder 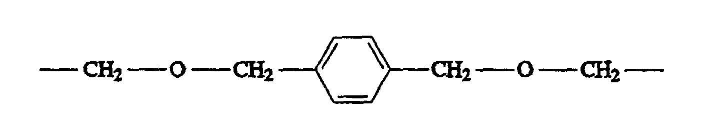 mit p = 2 bis 8 und q = 2 bis 5.

Das Brückenglied A steht insbesondere for eine chemische Bindung (formal abgeleitet von Oxalsäure) oder 1,2-Ethylen (abgeleitet von Bernsteinsäure), 1,4-Butylen (abgeleitet von Adipinsäure), Hexamethylen (abgeleitet von Korksäure), Octamethylen (abgeleitet von Sebacinsäure), 1,2-, 1,3- oder 1,4-Cyclohexylen oder 1,2-, 1,3- oder 1,4-Phenylen (abgeleitet von Phthalsäure, Isophthalsäure bzw. Terephthalsäure).

Die oben definierten Variablen R¹, R², Z¹ bis Z⁴ und A können zusätzlich durch die angegebenen Gruppen funktionalisiert sein. Dabei bedeuten C₁- bis C₄-Alkoxygruppen insbesondere Methoxy, Ethoxy, n-Propoxy, iso-Propoxy, n-Butoxy, iso-Butoxy, sec.-Butoxy oder tert.-Butoxy. Als Amino-Gruppierungen werden -NH₂, -NH(CH₃), -NH(CH₂CH₃), -N(CH₃)₂ und -N(CH₂CH₃)₂ bevorzugt. Carboxy-C₁- bis -C₄-alkylgruppen sind beispielsweise Carboxymethyl, Carboxyethyl, Carboxypropyl, Carboxybutyl oder Carboxy-tert.-butyl.

Gemäß einer Ausführungsform der Erfindung bevorzugte Bleichaktivatoren und Persäuren sind solche, die bei Temperaturen bis 100°C flüssig und in einer wäßrigen Phase emulgierbar sind, ohne sich zu mehr als 20% darin zu lösen. Ebenfalls besonders geeignet sind solche Bleichaktivatoren und Persäuren, die durch Zugabe eines wasserunlöslichen Hilfsmittels in eine in einer wäßrigen Phase emulgierbare Phase zu überführen sind, ohne sich dabei zu mehr als 20% in der wäßrigen Phase zu lösen. Als Hilfsmittel geeignete Öle sind vorstehend beschrieben.

Besonders erfindungsgemäß bevorzugte Bleichaktivatoren sind C₂-₁₄-Acyllactame, C₂₋₁₄-Vinylester oder -isopropenylester, Anhydride von C₂₋₁₂-Carbonsäuren und C₄-C₁₄ Dicarbonsäuren, O-C₂₋₁₄-Acyloximester von C₃₋₈-Ketonen, N-(C₂₋₁₄-Acyloxy)imide von cyclischen C₄-C₁₂-Carbonsäureimiden, N-C₂₋₁₄-Acyliminodinitrile oder -Glycinnitrile, 2-Alkyl-, 2-Aryl- oder 2-Aralkylanthranile mit C₁₋₁₄-Alkylresten, Arylresten oder Aralkylresten sowie O-C₂₋₁₈-Acylphenolderivate.

Erfindungsgemäß besonders bevorzugte Percarbonsäuren (Bleichmittel) sind C₆₋₁₄-Alkyl-, Aryl- oder Aralkylpercarbonsäuren sowie C₆₋₂₀-Alkylen-, Arylen- oder Aralkylendipercarbonsäuren.

Die erfindungsgemäßen Bleichhilfsmittel enthaltenden Mikrokapseln können in allen Anwendungen eingesetzt werden, in denen Bleichsysteme normalerweise eingesetzt werden.

Beispiele dafür sind Bleichschritte in Wasch- und Reinigungsprozessen, Bleichprozessen bei der Textil- und Zellstoffbleiche und Anwendungen im Bereich der Desinfektion. Gemäß einer bevorzugten Ausführungsform der Erfindung werden die Bleichhilfsmittel enthaltenden Mikrokapseln, insbesondere die Bleichaktivatoren enthaltenden Mikrokapseln in Wasch- und Reinigungsmitteln eingesetzt, die in flüssiger oder Pulverform vorliegen können.

Bleichaktivatoren und Persäuren als Bleichmittel sind reaktive Verbindungen, die bei direkter Einarbeitung in Wasch- und Reinigungsmittelformulierungen mit anderen Bestandteilen der Formulierungen reagieren können und dadurch zum einen andere Bestandteile der Formulierung zerstören können und zum anderen zum Zeitpunkt der Anwendung nicht mehr ihre volle Wirksamkeit aufweisen. Beispielsweise können Bleichaktivatoren mit den alkalischen Bestandteilen von Wasch- und Reinigungsmitteln unter Hydrolyse reagieren. Dieses Problem tritt insbesondere dann auf, wenn flüssige Bleichhilfsmittel eingesetzt werden, die in einer pulverförmigen Wasch- und Reinigungsmittelformulierung migrieren können.

Durch die Verkapselung in Mikrokapseln werden die Bleichhilfsmittel zum einen in eine besser handhabbare feste Form überführt, die insbesondere in pulverförmigen Wasch- und Reinigungsmitteln besser zu handhaben ist, als auch werden sie und die anderen Inhaltsstoffe der Formulierung effektiv vor Reaktionen und Veränderungen geschützt.

Zudem kann durch Verwendung der Mikrokapseln eine kontrollierte bzw. verzögerte Freisetzung der Bleichhilfsmittel im Wasch- oder Reinigungsprozeß erreicht werden, wenn die Polymerwände der Mikrokapseln durch Baseneinwirkung abgebaut werden. Eine unkontrollierte Wirkung der Bleichhilfsmittel wird damit unterbunden.

Die Erfindung betrifft auch Wasch- und Reinigungsmittel, welche die erfindungsgemäßen, Bleichhilfsmittel enthaltenden Mikrokapseln aufweisen.

Auf dem Gebiet der Textilwäsche, der Bleiche und der Reinigung im Haushalt und im gewerblichen Bereich können die beschriebenen Mikrokapseln mit nahezu allen üblichen Bestandteilen kombiniert werden. Man kann auf diese Weise beispielsweise Mittel aufbauen, die sich speziell zur Textilbehandlung bei niederen Temperaturen eignen, und auch solche, die in mehreren Temperaturbereichen bis hinauf zum traditionellen Bereich der Kochwäsche geeignet sind.

Hauptbestandteile von Wasch-, Bleich- und Reinigungsmitteln sind neben Perverbindungen und Aktivatoren Gerüstsubstanzen (Builder), d.h. anorganische Builder und/oder organische Cobuilder, und Tenside, insbesondere anionische und/oder nichtionische Tenside. Daneben können andere übliche Hilfsstoffe und Begleitstoffe wie Stellmittel, Komplexbildner, Phosphate, Farbstoffe, Korrosionsinhibitoren, Vergrauungsinhibitoren und/oder Soil-Release-Polymere, Farbübertragungsinhibitoren, Bleichkatalysatoren, Peroxidstabilisatoren, Elektrolyte, optische Aufheller, Enzyme, Parfümöle, Schaumregulatoren und aktivierende Substanzen in diesen Mitteln vorliegen, wenn dies zweckmäßig ist.

### Anorganische Builder (Gerüstsubstanzen)

Als anorganische Buildersubstanzen eignen sich alle üblichen anorganischen Builder wie Alumosilikate, Silikate, Carbonate und Phosphate.

Geeignete anorganische Builder sind z.B. Alumosilikate mit ionenaustauschenden Eigenschaften wie z.B. Zeolithe. Verschiedene Typen von Zeolithen sind geeignet, insbesondere Zeolith A, X, B, P, MAP und HS in ihrer Na-Form oder in Formen, in denen Na teilweise gegen andere Kationen wie Li, K, Ca, Mg oder Ammonium ausgetauscht sind. Geeignete Zeolithe sind beispielsweise beschrieben in EP-A 0 038 591, EP-A 0 021 491, EP-A 0 087 035, US 4,604,224, GB-A 20 13 259, EP-A 0 522 726, EP-A 0 384 070 und WO 94/24 251.

Weitere geeignete anorganische Builder sind z.B. amorphe oder kristalline Silikate wie z.B. amorphe Disilikate, kristalline Disilikate wie das Schichtsilikat SKS-6 (Hersteller Hoechst). Die Silikate können in Form ihrer Alkali-, Erdalkali- oder Ammoniumsalze eingesetzt werden. Vorzugsweise werden Na-, Li- und Mg-Silikate eingesetzt.

### Anionische Tenside

Geeignete anionische Tenside sind beispielsweise Fettalkoholsulfate von Fettalkoholen mit 8 bis 22, vorzugsweise 10 bis 18 Kohlenstoffatomen, z.B. C₉bis C₁₁-Alkoholsulfate, C₁₂- bis C₁₃-Alkoholsulfate, Cetylsulfat, Myristylsulfat, Palmitylsulfat, Stearylsulfat und Talgfettalkoholsulfat.

Weitere geeignete anionische Tenside sind sulfatierte ethoxylierte C₈- bis C₂₂-Alkohole (Alkylethersulfate) bzw. deren lösliche Salze. Verbindungen dieser Art werden beispielsweise dadurch hergestellt, daß man zunächst einen C₈- bis C₂₂-, vorzugsweise einen C₁₀- bis C₁₈-Alkohol, z.B. einen Fettalkohol, alkoxyliert und das Alkoxylierungsprodukt anschließend sulfatiert. Für die Alkoxylierung verwendet man vorzugsweise Ethylenoxid, wobei man pro Mol Fettalkohol 2 bis 50, vorzugsweise 3 bis 20 Mol Ethylenoxid einsetzt. Die Alkoxylierung der Alkohole kann jedoch auch mit Propylenoxid allein und gegebenenfalls Butylenoxid durchgeführt werden. Geeignet sind außerdem solche alkoxylierten C₈- bis C₂₂-Alkohole, die Ethylenoxid und Propylenoxid oder Ethylenoxid und Butylenoxid enthalten. Die alkoxylierten C₈- bis C₂₂-Alkohole können die Ethylenoxid-, Propylenoxid- und Butylenoxideinheiten in Form von Blöcken oder in statistischer Verteilung enthalten.

Weitere geeignete anionische Tenside sind Alkansulfonate wie C₈- bis C₂₄-, vorzugsweise C₁₀- bis C₁₈-Alkansulfonate sowie Seifen wie die Salze von C₈- bis C₂₄-Carbonsäuren.

Weitere geeignete anionische Tenside sind C₉- bis C₂₀-linear-Alkylbenzolsulfonate (LAS).

Die anionischen Tenside werden dem Waschmittel vorzugsweise in Form von Salzen zugegeben. Geeignete Salze sind Alkalimetallsalze wie Natrium-, Kalium- und Lithiumsalze und Ammoniumsalze wie z.B. Hydroxethylammonium-, Di(hydroxyethyl)ammonium- und Tri(hydroxyethyl)ammoniumsalze.

### Nichtionische Tenside

Als nichtionische Tenside eignen sich beispielsweise alkoxylierte C₈- bis C₂₂-Alkohole wie Fettalkoholalkoxylate oder Oxalkoholalkoxylate. Die Alkoxylierung kann mit Ethylenoxid, Propylenoxid und/oder Butylenoxid durchgeführt werden. Als Tensid einsetzbar sind hierbei sämtliche alkoxylierten Alkohole, die mindestens zwei Moleküle eines vorstehend genannten Alkylenoxids addiert enthalten. Auch hierbei kommen Blockpolymerisate von Ethylenoxid, Propylenoxid und/oder Butylenoxid oder Anlagerungsprodukte, die die genannten Alkylenoxide in statischer Verteilung enthalten, in Betracht. Pro Mol Alkohol verwendet man 2 bis 50, vorzugsweise 3 bis 20 Mol mindestens eines Alkylenoxids. Vorzugsweise setzt man als Alkylenoxid Ethylenoxid ein. Die Alkohole haben vorzugsweise 10 bis 18 Kohlenstoffatome.

Eine weitere Klasse geeigneter nichtionischer Tenside sind Alkylphenolethoxylate mit C₆- bis C₁₄-Alkylketten und 5 bis 30 Mol Ethylenoxideinheiten.

Eine weitere Klasse nichtionischer Tenside sind Alkylpolyglucoside mit 8 bis 22, vorzugsweise 10 bis 18 Kohlenstoffatomen in der Alkylkette. Diese Verbindungen enthalten meist 1 bis 20, vorzugsweise 1,1 bis 5 Glucosideinheiten.

Eine andere Klasse nichtionischer Tenside sind N-Alkylglucamide der allgemeinen Struktur (VI) oder (VII) 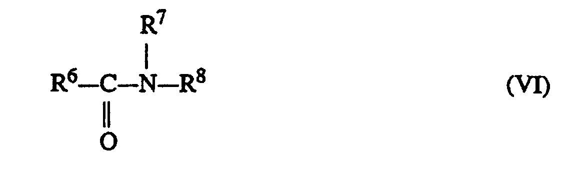 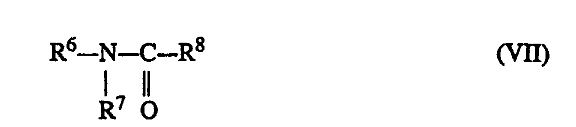 wobei R⁶ C₆- bis C₂₂-Alkyl, R⁷ H oder C₁- bis C₄-Alkyl und R⁸ ein Polyhydroxyalkyl-Rest mit 5 bis 12 C-Atomen und mindestens 3 Hydroxygruppen ist. Vorzugsweise ist R⁶ C₁₀- bis C₁₈-Alkyl, R⁷ Methyl und R⁸ ein C₅- oder C₆-Rest. Beispielsweise erhält man derartige Verbindungen durch die Acylierung von reduzierend aminierten Zuckern mit Säurechloriden von C₁₀-C₁₈-Carbonsäuren.

Vorzugsweise enthalten die erfindungsgemäßen Waschmittel mit 3-12 Mol Ethylenoxid ethoxylierte C₁₀-C₁₆-Alkohole, besonders bevorzugt ethoxylierte Fettalkohole als nichtionische Tenside.

### Organische Cobuilder

Geeignete niedermolekulare Polycarboxylate als organische Cobuilder sind beispielsweise:
C₄- bis C₂₀-Di-, -Tri- und -Tetracarbonsäuren wie Bernsteinsäure, Propantricarbonsäure, Butantetracarbonsäure, Cyclopentantetracarbonsäure und Alkylund Alkylenbernsteinsäuren mit C₂- bis C₁₆-Alkyl- bzw. -Alkylen-Resten;
C₄- bis C₂₀-Hydroxycarbonsäuren wie Äpfelsäure, Weinsäure, Gluconsäure, Glutarsäure, Citronensäure, Lactobionsäure und Saccharosemono-, -di- und -tricarbonsäure;
Aminopolycarboxylate wie Nitrilotriessigsäure, Methylglycindiessigsäure, Alanindiessigsäure, Ethylendiamintetraessigsäure und Serindiessigsäure;
Salze von Phosphonsäuren wie Hydroxyethandiphosphonsäure, Ethylendiamintetra(methylenphoshphonat) und Diethylentriaminpenta(methylenphosphonat).

Geeignete oligomere oder polymere Polycarboxylate als organische Cobuilder sind beispielsweise:
Oligomaleinsäuren, wie sie beispielsweise in EP-A 0 451 508 und EP-A 0 396 303 beschrieben sind;
Co- und Terpolymere ungesättigter C₄-C₈-Dicarbonsäuren, wobei als Comonomere monoethylenisch ungesättigte Monomere
   aus der Gruppe (i) in Mengen von bis zu 95 Gew.-%
   aus der Gruppe (ii) in Mengen von bis 60 Gew.-%
   aus der Gruppe (iii) in Mengen von bis zu 20 Gew.-%
einpolymerisiert enthalten sein können.

Als ungesättigte C₄-C₈-Dicarbonsäuren sind hierbei beispielsweise Maleinsäure, Fumarsäure, Itaconsäure und Citraconsäure geeignet. Bevorzugt ist Maleinsäure.

Die Gruppe (i) umfaßt monoethylenisch ungesättigte C₃-C₈-Monocarbonsäuren wie Acrylsäure, Methacrylsäure, Crotonsäure und Vinylessigsäure. Bevorzugt werden aus der Gruppe (i) Acrylsäure und Methacrylsäure eingesetzt.

Die Gruppe (ii) umfaßt monoethylenisch ungesättigte C₂-C₂₂-Olefine, Vinylalkylether mit C₁-C₈-Alkylgruppen, Styrol, Vinylester von C₁-C₈ Carbonsäuren, (Meth)acrylamid und Vinylpyrrolidon. Bevorzugt werden aus der Gruppe (ii) C₂-C₆-Olefine, Vinylalkylether mit C₁-C₄-Alkylgruppen, Vinylacetat und Vinylpropionat eingesetzt.

Die Gruppe (iii) umfaßt (Meth)acrylester von C₁- bis C₈-Alkoholen, (Meth)acrylnitril, (Meth)acrylamide von C₁-C₈-Aminen, N-Vinylformamid und Vinylimidazol.

Falls die Polymeren der Gruppe (ii) Vinylester einpolymerisiert enthalten, können dieses auch teilweise oder vollständig zu Vinylalkohol-Struktureinheiten hydrolysiert vorliegen. Geeignete Co- und Terpolymere sind beispielsweise aus US 3,887,806 sowie SE-A 43 13 909 bekannt.

Als Copolymere von Dicarbonsäuren eignen sich vorzugsweise:

Copolymere von Maleinsäure und Acrylsäure im Gewichtsverhältnis
10:90 bis 95:5, insbesondere bevorzugt solche im Gewichtsverhältnis
30:70 bis 90:10 mit Molmassen von 10000 bis 150000;

Terpolymere aus Maleinsäure, Acrylsäure und einem Vinylester einer C₁-C₃-Carbonsäure im Gewichtsverhältnis 10 (Maleinsäure) : 90 (Acrylsäure + Vinylester) bis 95 (Maleinsäure) : 10 (Acrylsäure + Vinylester), wobei das Gew.-Verhältnis von Acrylsäure zu Vinylester im Bereich von 20:80 bis 80:20 variieren kann, und besonders bevorzugt:

Terpolymere aus Maleinsäure, Acrylsäure und Vinylacetat oder Vinylpropionat im Gewichtsverhältnis 20 (Maleinsäure) : 80 (Acrylsäure + Vinylester) bis 90 (Maleinsäure) : 10 (Acrylsäure + Vinylester), wobei das Gew.-Verhältnis von Acrylsäure zum Vinylester im Bereich von 30 : 70 bis 70 : 30 variieren kann;

Copolymere von Maleinsäure mit C₂-C₈-Olefinen im Molverhältnis 40:60 bis 80:20, wobei Copolymere von Maleinsäure mit Ethylen, Propylen oder Isobuten im Molverhältnis 50:50 besonders bevorzugt sind.

Pfropfpolymere ungesättigter Carbonsäuren auf niedermolekulare Kohlenhydrate oder hydrierte Kohlenhydrate, vgl. US 5,227,446, DE-A 44 15 623, DE-A 43 13 909, sind ebenfalls als organische Cobuilder geeignet.

Geeignete ungesättigte Carbonsäuren sind hierbei beispielsweise Maleinsäure, Fumarsäure, Itaconsäure, Citraconsäure, Acrylsäure, Methacrylsäure, Crotonsäure und Vinylessigsäure sowie Mischungen aus Acrylsäure und Maleinsäure, die in Mengen von 40 bis 95 Gew.-%, bezogen auf die zu pfropfende Komponente, aufgepfropft werden.

Zur Modifizierung können zusätzlich bis zu 30 Gew.-%, bezogen auf die zu pfropfende Komponente, weitere monoethylenisch ungesättigte Monomere einpolymerisiert vorliegen. Geeignete modifizierende Monomere sind die oben genannten Monomere der Gruppen (ii) und (iii).

Als Pfropfgrundlage sind abgebaute Polysaccharide wie saure oder enzymatisch abgebaute Stärken, Inuline oder Zellulose, reduzierte (hydrierte oder hydrierend aminierte) abgebaute Polysaccharide wie Mannit, Sorbit, Aminosorbit und Glucamin geeignet sowie Polyalkylenglykole mit Molmassen bis zu M_{w} = 5000 wie z.B. Polyethylenglycole, Ethylenoxid/Propylenoxid- bzw. Ethylenoxid/Butylenoxid-Blockcopolymere, statistische Ethylenoxid/Propylenoxid- bzw. Ethylenoxid/Butylenoxid-Copolymere, alkoxylierte ein- oder mehrwertige C₁-C₂₂-Alkohole, vgl. US 4,746,456.

Bevorzugt werden aus dieser Gruppe gepfropfte abgebaute bzw. abgebaute reduzierte Stärken und gepfropfte Polyethylenoxide eingesetzt, wobei 20 bis 80 Gew.-% Monomere bezogen auf die Pfropfkomponente bei der Pfropfpolymerisation eingesetzt werden. Zur Pfropfung wird vorzugsweise eine Mischung von Maleinsäure und Acrylsäure im Gew.-Verhältnis von 90:10 bis 10:90 eingesetzt.

Polyglyoxylsäuren als organische Cobuilder sind beispielsweise in EP-B 0 001 004, US 5,399,286, DE-A 41 06 355 und EP-A 0 656 914 beschrieben. Die Endgruppen der Polyglyoxylsäuren können unterschiedliche Strukturen aufweisen.

Polyamidocarbonsäuren und modifizierte Polyamidocarbonsäuren als organische Cobuilder sind beispielsweise aus EP-A 0 454 126, EP-B 0 511 037, WO 94/01486 und EP-A 0 581 452 bekannt.

Vorzugsweise verwendet man als organische Cobuilder auch Polyasparaginsäure oder Cokondensate der Asparaginsäure mit weiteren Aminosäuren, C₄-C₂₅-Mono- oder -Dicarbonsäuren und/oder C₄-C₂₅-Mono- oder -Diaminen. Besonders bevorzugt werden mit C₆-C₂₂-Mono- oder -Dicarbonsäuren bzw. mit C₆-C₂₂-Mono- oder -Diaminen modifizierte Polyasparaginsäuren eingesetzt.

Kondensationsprodukte der Citronensäure mit Hydroxycarbonsäuren oder Polyhydroxyverbindungen als organische Cobuilder sind z.B. aus WO 93/22362 und WO 92/16493 bekannt. Solche Carboxylgruppen enthaltenden Kondensate haben üblicherweise Molmassen bei zu 10000, vorzugsweise bis zu 5000.

### Vergrauungsinhibitoren und Soil-Release-Polymere

Geeignete Soil-Release-Polymere und/oder Vergrauungsinhibitoren für Waschmittel sind beispielsweise:
Polyester aus Polyethylenoxiden mit Ethylenglykol und/oder Propylenglykol und aromatischen Dicarbonsäuren oder aromatischen und aliphatischen Dicarbonsäuren;
Polyester aus einseitig endgruppenverschlossenen Polyethylenoxiden mit zweiund/oder mehrwertigen Alkoholen und Dicarbonsäuren.
Derartige Polyester sind bekannt, beispielsweise aus US 3,557,039, GB-A 11 54 730, EP-A 0 185 427, EP-A 0 241 984, EP-A 0 241 985, EP-A 0 272 033 und US 5,142,020.

Weitere geeignete Soil-Release-Polymere sind amphiphile Pfopf- oder Copolymere von Vinyl- und/oder Acrylestern auf Polyalkylenoxide (vgl. US 4,746,456, US 4,846,995, DE-A 37 11 299, US 4,904,408, US 4,846,994 und US 4,849,126) oder modifizierte Cellulosen wie Methylcellulose, Hydroxypropylcellulose oder Carboxymethylcellulose.

### Farbübertragungsinhibitoren

Als Farbübertragungsinhibitoren werden beispielsweise Homo- und Copolymere des Vinylpyrrolidons, des Vinylimidazols, des Vinyloxazolidons und des 4-Vinylpyridin-N-oxids mit Molmassen von 15000 bis 100 000 sowie vernetzte feinteilige Polymere auf Basis dieser Monomeren eingesetzt. Die hier genannte Verwendung solcher Polymere ist bekannt, vgl. DE-B 22 32 353, DE-A 28 14 287, DE-A 28 14 329 und DE-A 43 16 023.

### Enzyme

Geeignete Enzyme sind Proteasen, Lipasen, Amylasen sowie Cellulasen. Das Enzymsystem kann auf ein einzelnes der Enzyme beschränkt sein oder eine Kombination verschiedener Enzyme beinhalten.

### Verwendung in Waschmitteln und Bleichmitteln für die Textilwäsche

Die erfindungsgemäß zu verwendenden Bleichhilfsmittel enthaltenden Mikrokapseln werden vorzugsweise in pulver- oder granulatförmigen Waschmitteln eingesetzt. Dabei kann es sich um klassische Vollwaschmittel oder konzentrierte bzw. kompaktierte Waschmittel handeln.

Ein typisches erfindungsgemäßes pulver- oder granulatförmiges (Voll)waschmittel, das Bleichhilfsmittel in Mikrokapseln enthält, kann beispielsweise die nachstehende Zusammensetzung aufweisen:
0,5 bis 50, vorzugsweise 5 bis 30 Gew.-% mindestens eines anionischen und/oder nicht-ionischen Tensids, wobei vorzugsweise 8 Gew.-% LAS, besonders bevorzugt maximal 4 Gew.-% LAS in der Waschmittelformulierung enthalten sind,
0,5 bis 60, vorzugsweise 15 bis 40 Gew.-% mindestens eines anorganischen Builders,
0 bis 20, vorzugsweise 0,5 bis 8 Gew.-% mindestens eines organischen Cobuilders,
0 bis 35, vorzugsweise 5 bis 30 Gew.-% Perborat oder Percarbonat,
0,01 bis 30, vorzugsweise 0,5 bis 10 Gew.-% erfindungsgemäße Mikrokapseln, vorzugsweise Bleichhilfsmittel enthaltend,
0 bis 5 Gew.-%, vorzugsweise 0 bis 2,5 Gew.-% eines polymeren Farbübertragungsinhibitors,
0 bis 1,5 Gew.-%, vorzugsweise 0,01 bis 1,0 Gew.-% Protease,
0 bis 1,5 Gew.-%, vorzugsweise 0,01 bis 1,0 Gew.-% andere Waschmittelenzyme,
0 bis 1,5 Gew.-%, vorzugsweise 0,2 bis 1,0 Gew.-% eines Soil-Release-Polymers und/oder Vergrauungsinhibitors,
ad 100% übliche Hilfsstoffe und Wasser.

Die einzelnen Waschmittelkomponenten sind nachstehend detaillierter beschrieben:

Vorzugsweise in Waschmitteln eingesetzte anorganische Builder sind Natriumcarbonat, Natriumhydrogencarbonat, Zeolith A und P sowie amorphe und kristalline Na-Silikate.

Vorzugsweise in Waschmitteln eingesetzte organische Cobuilder sind Acrylsäure/Maleinsäure-Copolymere, Acrylsäure/Maleinsäure/Vinylester-Terpolymere und Citronensäure.

Vorzugsweise in Waschmitteln eingesetzte anorganische Bleichmittel sind Natriumperborat und Natriumcarbonat-Perhydrat.

Vorzugsweise in Waschmitteln eingesetzte anorganische Tenside sind Fettalkoholsulfate, Linear-Alkylbenzolsulfonate (LAS) und Seifen, wobei der Anteil an LAS vorzugsweise unter 8 Gew.-%, besonders bevorzugt unter 4 Gew.-% liegt.

Vorzugsweise in Waschmitteln eingesetzte nichtionische Tenside sind C₁₁- bis C₁₇-Oxoalkoholethoxylate mit 3-13 Ethylenoxid-Einheiten, C₁₀- bis C₁₆-Fettalkoholethyoxylate mit 3-13 Ethylenoxideinheiten sowie zusätzlich mit 1-4 Propylenoxid- oder Butylenoxid-Einheiten alkoxylierte Fett- oder Oxoalkohole.

Vorzugsweise in Waschmitteln eingesetzte Enzyme sind Protease, Lipase und Cellulase. Von den handelsüblichen Enzymen werden den Waschmitteln in der Regel Mengen von 0,1 bis 1,5 Gew.-%, vorzugsweise 0,2 bis 1,0 Gew.-% des konfektionierten Enzyms zugesetzt. Geeignete Proteasen sind z.B. Savinase und Esperase (Hersteller Novo Nordisk). Eine geeignete Lipase ist z.B. Lipolase (Hersteller Novo Nordisk). Eine geeignete Cellulase ist z.B. Celluzym (Hersteller Novo Nordisk).

Vorzugsweise in Waschmitteln eingesetzte Vergrauungsinhibitoren und Soil-Release-Polymere sind Pfropfpolymere von Vinylacetat auf Polyethylenoxid der Molmasse 2500-8000 im Gewichtsverhältnis 1,2:1 bis 3,0:1, Polyethylenterephthalate/Oxyethylenterephthalate der Molmasse 3000 bis 25 000 aus Polyethylenoxiden der Molmasse 750 bis 5000 mit Terephthalsäure und Ethylenoxid und einem Molverhältnis von Polyethylenterephthalat zu Polyoxyethylenterephthalat von 8:1 bis 1:1 sowie Blockpolykondensate gemäß DE-A 44 03 866.

Vorzugsweise in Waschmitteln eingesetzte Farbübertragungsinhibitoren sind lösliche Vinylpyrrolidon- und Vinylimidazol-Copolymere mit Molmassen über 25 000 sowie feinteilige vernetzte Polymere auf Basis Vinylimidazol.

Die erfindungsgemäßen pulver- oder granulatförmigen Waschmittel können bis zu 60 Gew.-% anorganischer Stellmittel enthalten. Vorzugsweise sind die erfindungsgemäßen Waschmittel aber arm an Stellmitteln und enthalten nur bis zu 20 Gew.-%, besonders bevorzugt nur bis 8 Gew.-% an Stellmitteln.

Die erfindungsgemäßen Waschmittel können unterschiedliche Schüttdichten im Bereich von 300 bis 1200, insbesondere 500 bis 950 g/l besitzen. Moderne Kompaktwaschmittel besitzen in der Regel hohe Schüttdichten und zeigen einen Granulataufbau.

Neben kombinierten Wasch- und Bleichmitteln kommen als Konfektionierungsform der beschriebenen Aktivatoren für die Textilwäsche auch Mittel in Betracht, die als Zusätze zu peroxidhaltigen oder peroxidfreien Waschmitteln angewendet werden. Sie enthalten im wesentlichen Aktivator beziehungsweise ein Gemisch aus Aktivator und Perverbindung sowie gegebenenfalls weitere Hilfs- und Zusatzstoffe, insbesondere Stabilisatoren, pH-regulierende Mittel, Verdickungsmittel und Tenside.

Gegenstand der vorliegenden Erfindung sind weiterhin auch Bleichzusatzmittel für die Textilwäsche, welche 1 bis 30 Gew.-%, vorzugsweise 5 bis 25 Gew.-%, bezogen auf die Gesamtmenge der Zusatzmittelzubereitung, der Mikrokapseln enthalten.

Typische derartige Bleichzusatzmittel haben etwa folgende Zusammensetzung:
5 bis 50 Gew.-%, vorzugsweise 15 bis 35 Gew.-% anorganische Perverbindung,
0,01 bis 30 Gew.-%, vorzugsweise 1 bis 30 Gew.-%, besonders bevorzugt 5 bis 25 Gew.-% der Bleichhilfsmittel enthaltenden Mikrokapseln,
0 bis 5 Gew.-%, vorzugsweise 0,1 bis 3 Gew.-% Peroxidstabilisatoren,
0 bis 40 Gew.-%, vorzugsweise 5 bis 30 Gew.-% pH-regulierende Mittel,
ad 100 Gew.-% andere übliche Hilfs- und Zusatzstoffe.

Gegenstand der vorliegenden Erfindung sind auch Geschirrreinigungsmittel,. welche 0,01 bis 15 Gew.-%, vorzugsweise 0,1 bis 10 Gew.-%, insbesondere 0,5 bis 5 Gew.-%, jeweils bezogen auf die Gesamtmenge der Zubereitung, der Mikrokapseln neben den hierbei üblichen Bestandteilen enthalten.

Zur Reinigung harter Oberflächen bestimmte Mittel enthalten allgemein neben Perverbindung und Aktivator insbesondere Tenside, Gerüstsubstanzen und, im Falle von Polier- und Scheuermitteln, abrasiv wirkende Bestandteile. Da diese Mittel häufig bei Raumtemperatur angewendet werden, wirkt sich hier die Verwendung der erfindungsgemäßen Aktivatoren besonders vorteilhaft auf die bleichende und keimtötende Wirkung aus.

Besondere Bedeutung besitzen konfektionierte Mittel bei der Anwendung in der Desinfektion, da hier im allgemeinen erhöhte Anforderungen an die Anwendungsicherheit gestellt werden. Desinfektionsmittel auf Basis der beschriebenen Aktivatoren enthalten neben diesen und anorganischen Perverbindungen im allgemeinen noch weitere Hilfs- und Zusatzstoffe wie pH-regulierende Substanzen, Stabilisatoren und Tenside. In besonderen Fällen können sie zusätzlich spezielle Mikrobizide enthalten, die die an sich sehr breite abtötende Wirkung der aktivierten Perverbindung gegenüber bestimmten Keimen verstärken.

Gegenstand der vorliegenden Erfindung sind weiterhin auch Desinfektionsmittel, welche 1 bis 40 Gew.-%, vorzugsweise 5 bis 30 Gew.-%, bezogen auf die Gesamtmenge der Zubereitung, der Mikrokapseln enthalten.

Typische derartige Desinfektionsmittel haben etwa folgende Zusammensetzung:
5 bis 40 Gew.-%, vorzugsweise 10 bis 20 Gew.-% anorganische Perverbindung,
1 bis 40 Gew.-%, vorzugsweise 5 bis 30 Gew.-% der Mikrokapseln,
0 bis 5 Gew.-%, vorzugsweise 0,1 bis 3 Gew.-% Peroxidstabilisatoren,
0,1 bis 20 Gew.-%, vorzugsweise 0,2 bis 5 Gew.-% Tenside,
ad 100 Gew.-% weitere Hilfs- und Zusatzstoffe.

Die erfindungsgemäße Verwendung der beschriebenen Mikrokapseln ist aber keinesfalls auf die Verwendung in konfektionierter Form dieser geschilderten oder anderer Arten beschränkt. So entsteht beispielsweise im gewerblichen Bereich im allgemeinen die Einzeldosierung von Reagenzien im Vordergrund, da sie oft das kostengünstigere Verfahren darstellt.

Mit den Mikrokapseln läßt sich eine deutliche Verbesserung der Bleich-, Oxidations- und Reinigungswirkung im unteren Temperaturbereich bei den geschilderten technischen Anwendungen erzielen.

Die Erfindung wird nachstehend anhand von Beispielen näher erläutert.

### Beispiel 1

### Herstellung von N-Octanoylcaprolactam

In einem Rundkolben werden 113 g (1 mol) ε-Caprolactam (Reinheit>99 Gew.-%) in 200 ml Toluol gelöst. In die werden 127 g (1 mol) N,N-Dimethylcyclohexylamin eingetragen. Sodann werden bei 40-70°C 164,2g (1 mol) Octansäurechlorid (Reinheit 99 Gew.-%) zugetropft. Sodann wird das Reaktionsgemisch für eine Stunde bei 65-70°C gerührt. Zur Abtrennung des entstandenen Ammoniumsalzes wird dann zunächst 1 mal mit 130 ml heißem Wasser gewaschen, sodann mit 10 ml konzentrierter HCl gelöst in 130 ml heißem Wasser. Anschließend wird nochmals 3 mal mit 130 ml heißem Wasser gewaschen, um einen pH-Wert von 5-7 im Reaktionsgemisch zu erhalten. Das Lösungsmittel wird bei 70-80°C unter vermindertem Druck (Wasserstrahlvakuum) abdestilliert. Man erhält N-Octanoylcaprolactam in 93%iger Ausbeute als gelbe Flüssigkeit mit einer Reinheit von 98%.

### Beispiel 2

### Herstellung von Benzoylcaprolactam

Die Titelverbindung wird analog zu Beispiel 1 aus Benzoylchlorid und Caprolactam in einer Ausbeute von 95% hergestellt. Die Reinheit des Produktes beträgt 98%.

### Beispiel 3

### Herstellung von Octanoyloxysuccinimid

In einem Rundkolben werden 115,1 g (1 mol) N-Hydroxybernsteinsäureimid in 600 ml Toluol vorgelegt und mit 127,3 g (1 mol) Dimethylcyclohexylamin versetzt. Bei 60°C werden 162,5 g (1 mol) Octanoylchlorid in 180 ml Toluol zugetropft. Der Reaktionsansatz wird 5 Stunden bei 60°C gerührt. Anschließend wird mit Wasser versetzt und die organische Phase in dieser Reihenfolge mit Wasser, konzentrierter Salzsäure, Wasser und Natriumhydrogencarbonatlösung gewaschen. Die organische Phase wird über Natriumsulfat getrocknet, filtriert und eingeengt. Der kristallisierte Rückstand wird bei 40°C/100 mbar getrocknet. Man erhält 219 g (90%) an Octanoyloxysuccinimid in einer Reinheit von 99,5%.

### Beispiel 4

### Herstellung von N-Octanoylcaprolactam enthaltenden Mikrokapseln

Eine Mischung aus
32g Wasser
0,84g Polyvinylalkohol (88% verseift, mittleres Molekulargewicht 128000),
0,84g Polyvinylpyrrolidon mit einem K-Wert 90,
20g N-Octanoylcaprolactam,
0,27g Methylmethacrylat,
0,24g Methacrylsäureanhydrid,
0,007g t-Butylperpivalat
wird bei Raumtemperatur mit einem Stabturrax T25 (Janke und Kunkel, Staufen) bei 8000 U/min. eine Minute dispergiert. Es entsteht eine stabile Öl-in-Wasser Emulsion von Teilchen von 1-10µm Durchmesser. Diese Emulsion wird unter Rühren mit einem Ankerrührer auf 59°C aufgeheizt. Die Temperatur der Öl-in-Wasser Emulsion wird dann innerhalb von einer Stunde auf 63°C und innerhalb von weiteren drei Stunden auf 80°C erhöht. Der größte Teil der Mikrokapseln besitzt einen Durchmesser von 3-7µm, einige wenige von bis zu 15µm.

### Beispiel 5

Eine Mischung aus
32g Wasser
0,84g Polyvinylalkohol (88% verseift, mittleres Molekulargewicht 128000),
0,84g Polyvinylpyrrolidon mit einem K-Wert 90,
10g Weißöl
10g N-Octanoylcaprolactam,
0,27g Methylmethacrylat,
0,24g Methacrylsäureanhydrid,
0,007g t-Butylperpivalat
wird bei Raumtemperatur mit einem Stabturrax T25 (Janke und Kunkel, Staufen) bei 8000 U/min. eine Minute dispergiert. Es entsteht eine stabile Öl-in-Wasser Emulsion von Teilchen von 1-10µm Durchmesser. Diese Emulsion wird unter Rühren mit einem Ankerrührer auf 59°C aufgeheizt. Die Temperatur der Öl-in-Wasser Emulsion wird dann innerhalb von einer Stunde auf 63°C und innerhalb von weiteren drei Stunden auf 80°C erhöht. Der größte Teil der Mikrokapseln besitzt ein Durchmesser von 2-8µm, einige wenige von bis zu 20µm.

### Beispiel 6

Eine Mischung aus
32g Wasser
0,84g Polyvinylalkohol (88% verseift, mittleres Molekulargewicht 128000),
0,84g Polyvinylpyrrolidon mit einem K-Wert 90,
20g Hydroxisuccinimidoctanoylester
0,27g Methylmethacrylat,
0,24g Methacrylsäureanhydrid,
0,007g t-Butylperpivalat
wird analog dem Beispiel 5 hergestellt. Die meisten Mikrokapseln besitzen einen Durchmesser von 2 bis 10 µm, einige wenige bis 15 µm.

### Beispiel 7

Eine Mischung aus
32g Wasser
0,84g Polyvinylalkohol (88% verseift, mittleres Molekulargewicht 128000),
0,84g Polyvinylpyrrolidon mit einem K-Wert 90,
10g Diisopropylnaphthalin
10g Benzoylcaprolactam
0,27g Methylmethacrylat,
0,24g Methacrylsäureanhydrid,
0,007g t-Butylperpivalat
wird analog dem Beispiel 5 hergestellt. Die meisten Mikrokapseln besitzen einen Durchmesser von 2 bis 5 µm.

Die Octanoylcaprolactam enthaltenen Mikrokapseln aus Beispiel 4 wurden Waschmittelzusammensetzungen von Vollwaschmitteln zugesetzt. Die Waschmittelformulierungen sind in nachstehender Tabelle angegeben. Nach 30 Tagen bei Raumtemperatur wurde in allen Formulierungen eine höhere Bleichwirkung im Waschversuch beobachtet, als in der Formulierung ohne Bleichaktivator.

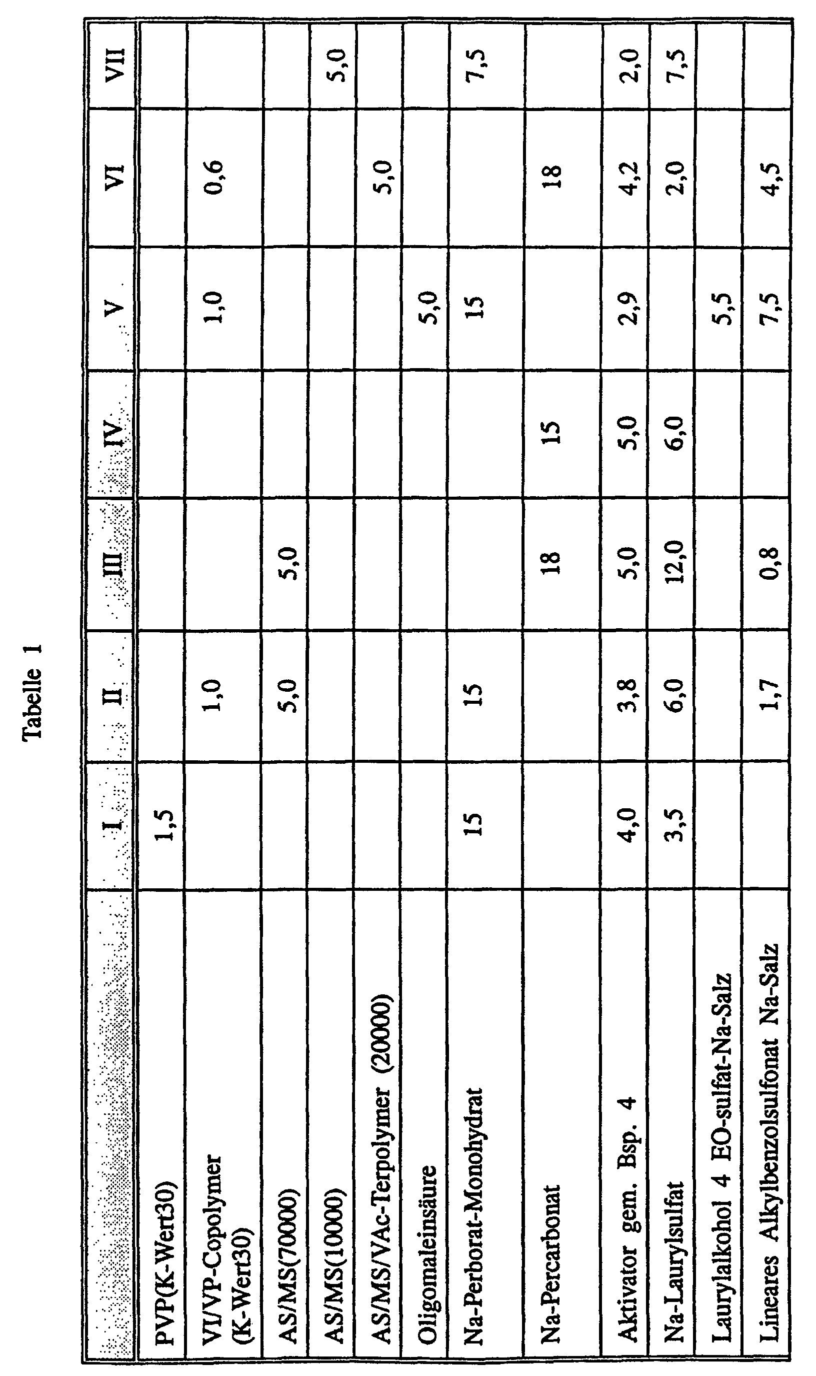

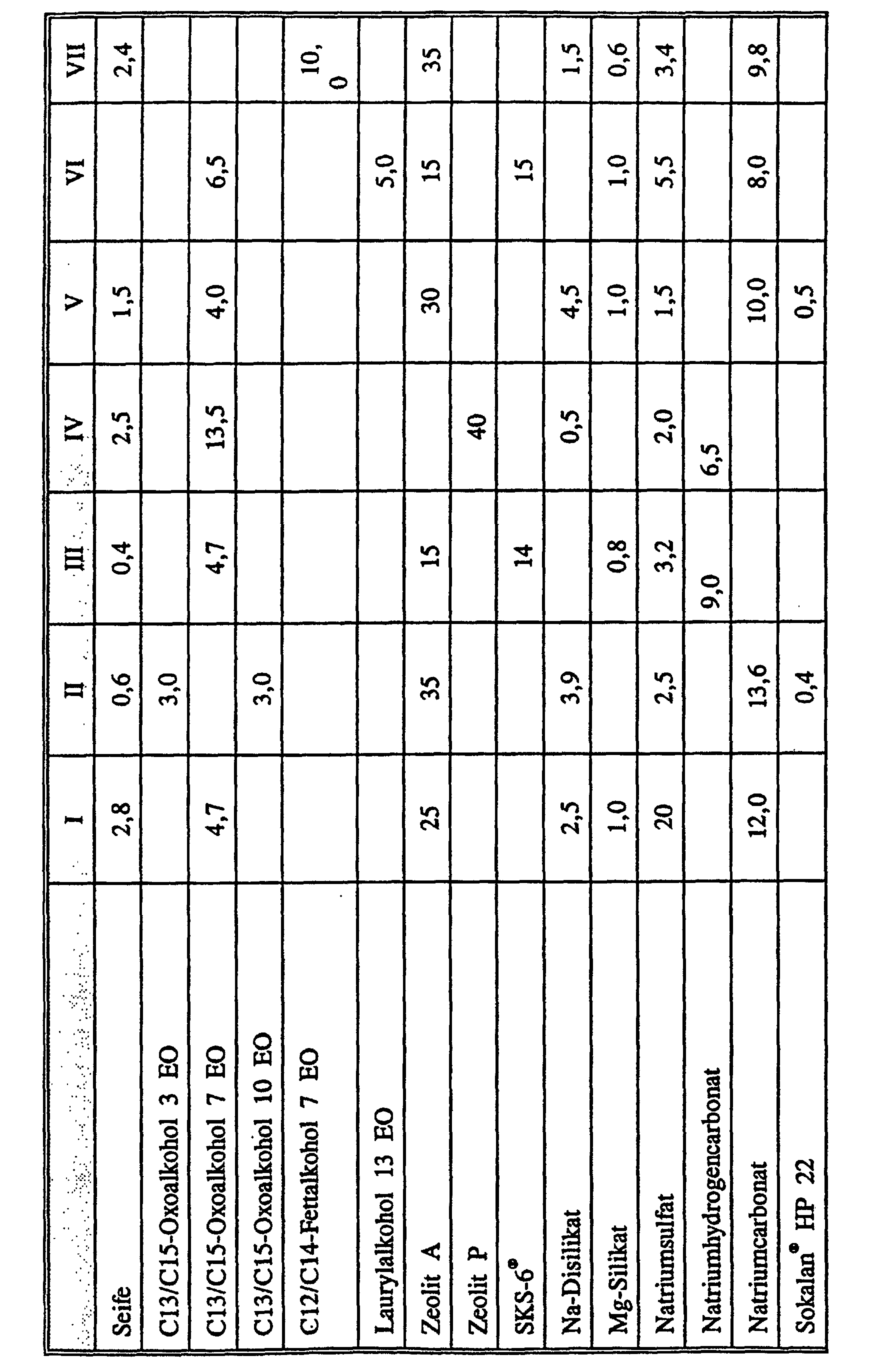

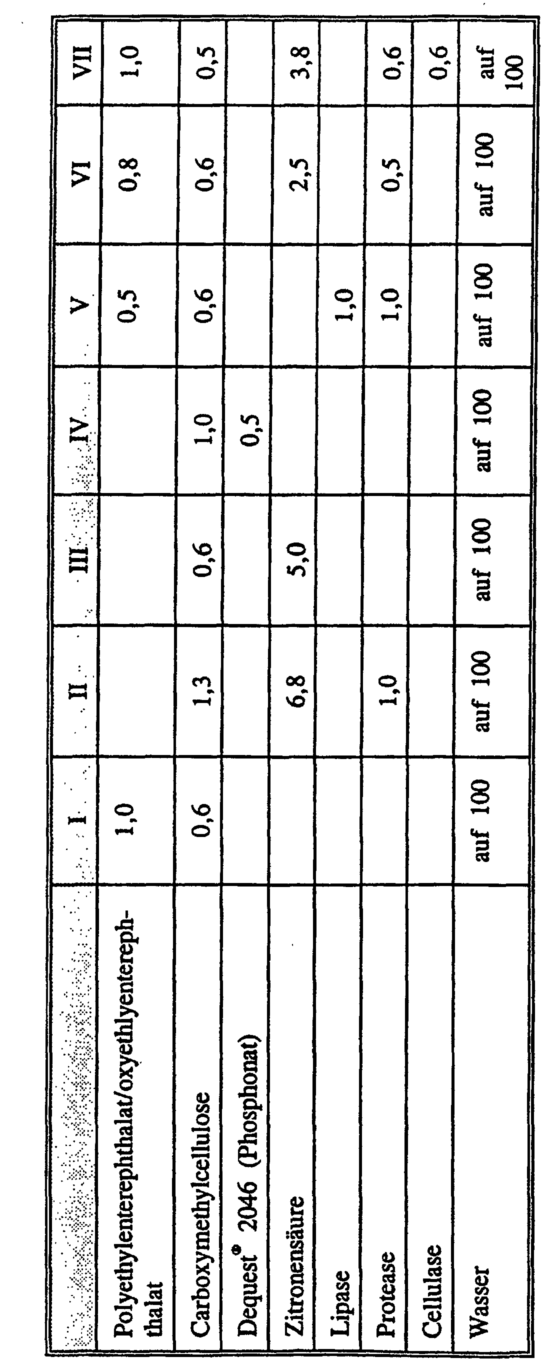

Prüfung der Bleichwirkung in den erfindungsgemäßen Waschmittelformulierungen

Zur Prüfung der Wirkung der erfindungsgemäßen mikroverkapselten Bleichaktivatoren in den erfindungsgemäßen Waschmittelformulierungen wurden Waschversuche in der vorstehenden Waschmittelzusammensetzungen III mit Testanschmutzungen von Rotwein, Tee und Chlorophyll auf Baumwolle durchgeführt.

Die Prüfung erfolgte im Launder-O-meter, Typ Atlas Standard unter den in Tabelle 2 angegebenen Bedingungen.

**Tabelle 2**

| Waschbedingungen | |
|---|---|
| Gerät | Launder-O-meter |
| Zyklen | 1 |
| Dauer | 30 min |
| Temperaturen | 22°C, 38°C und 60°C |
| Wasserhärte | 3,0 mmol/l |
| Prüfgewebe | 3x2,5g verschiedene Testgewebe (mit Rotwein, Tee, Chlorophyll angeschmutzte gebleichte Baumwolle) 2x2,5g Baumwolle-Ballastgewebe |
| Flottenmenge | 250 ml |
| Flottenverhältnis | 1:20 |
| Waschmittel | Nr.III aus Tab. 1 unter Verwendung der in Tab. 3 und 4 angegebenen Aktivators |
| Waschmittelkonzentration | 4,5g/l. |

Die Messung der Farbstärke der Prüfgewebe erfolgte photometrisch. Aus den an den einzelnen Prüfgeweben gemessenen Remissionswerten bei 16 Wellenlängen im Bereich von 400 bis 700 nm im Abstand von 20 nm wurden nach dem in A. Kud, Seifen, Öle, Fette Wachse 119, S. 590-594 (1993) beschriebenen Verfahren die jeweiligen Farbstärken der Testanschmutzungen vor und nach der Wäsche bestimmt und daraus die absolute Bleichwirkung A_{abs} in % berechnet.

Große Werte von A_{abs} geben dabei eine hohe Bleichwirkung an.

Die Ergebnisse für die unterschiedlichen Anschmutzungen und für das erfindungsgemäße Waschmittel im Vergleich zu einem Waschmittel, bei dem der Aktivator ohne Mikrokapsel eingesetzt wurde und zu einem Waschmittelsystem ohne Aktivator sind in Tabellen 3 und 4 angegeben.

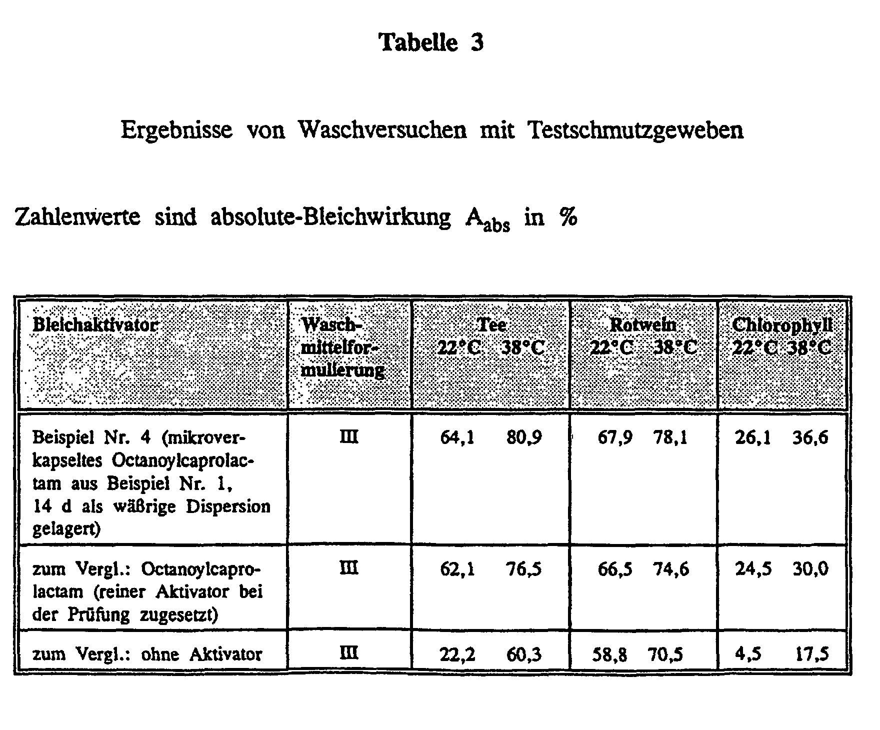

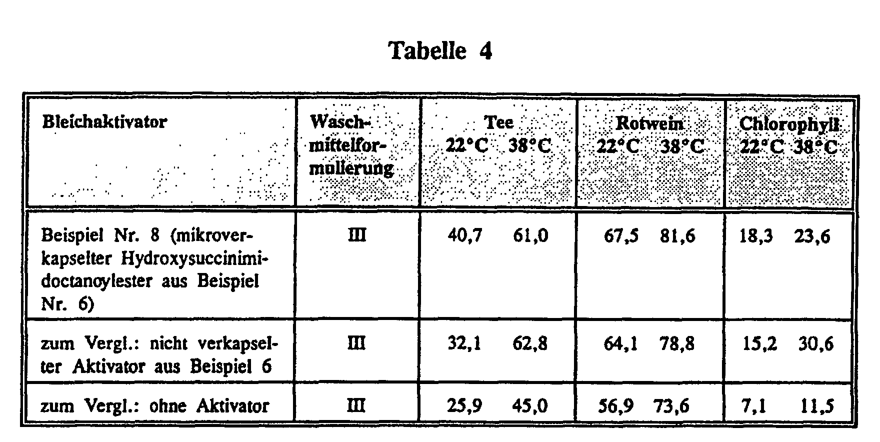

Die Ergebnisse für die Bleichwirkung in Tabellen 3 und 4 zeigen, daß die Bleichwirkung im Waschmittel mit dem erfindungsgemäßen verkapselten Bleichaktivator größer ist als die eines direkt zugesetzten Bleichaktivators. Bei längerer Lagerzeit des Waschmittels wird der Unterschied auch deutlicher, da sich das Bleichmittel bei reinem Aktivator ohne Mikroverkapselung schneller zersetzt. Der Bleichaktivator wird durch die Polymerisationsumsetzung zur Verkapselung und die Lagerung der verkapselten Dispersion nicht beeinträchtigt, die Kapsel löst sich bei den Waschbedingungen definiert auf und erlaubt eine gesteuerte Freisetzung des Bleichaktivators.

## Patentansprüche

1. Bleichhilfsmittel enthaltende Mikrokapseln,
erhältlich durch Polymerisieren von Monomergemischen, die
5 bis 100 Gew.-% mindestens eines ethylenisch ungesättigten Carbonsäureanhydrids (a),
0 bis 95 Gew.-% mindestens eines von den Monomeren der Gruppe (a) verschiedenen monoethylenisch ungesättigten Monomeren (b),
0 bis 80 Gew.-% an vernetzend wirkenden Monomeren (c), die mindestens zwei monoethylenisch ungesättigte, nicht konjugierte Doppelbindungen im Molekül aufweisen, und
0 bis 20 Gew.-% wasserlösliche monoethylenisch ungesättigte Monomere (d)
enthalten, wobei die Komponenten (a) bis (d) insgesamt 100 Gew.-% ergeben, in der Ölphase einer stabilen Öl-in-Wasser-Emulsion in Gegenwart von Radikale bildenden Polymerisationsinitiatoren, wobei man gegebenenfalls während der Polymerisation die Temperatur des polymerisierenden Reaktionsgemisches kontinuierlich oder periodisch erhöht, wobei die Ölphase das Bleichhilfsmittel enthält oder aus diesem besteht.

2. Mikrokapseln nach Anspruch 1, wobei die Ölphase aus dem Bleichhilfsmittel besteht.

3. Mikrokapseln nach Anspruch 1 oder 2, wobei die Carbonsäureanhydride (a) ausgewählt sind aus inneren Anhydriden von ethylenisch ungesättigten Dicarbonsäuren und Anhydriden von ethylenisch ungesättigten Monocarbonsäuren oder deren Gemischen.

4. Mikrokapseln nach einem der Ansprüche 1 bis 3, wobei das Bleichhilfsmittel ein Bleichaktivator und/oder Bleichkatalysator ist.

5. Verfahren zur Herstellung von Bleichhilfsmittel enthaltenden Mikrokapseln, wobei man Monomergemische, die
5 bis 100 Gew.-% mindestens eines ethylenisch ungesättigten Carbonsäureanhydrids (a),
0 bis 95 Gew.-% mindestens eines von den Monomeren der Gruppe (a) verschiedenen monoethylenisch ungesättigten Monomeren (b),
0 bis 80 Gew.-% an vernetzend wirkenden Monomeren (c), die mindestens zwei monoethylenisch ungesättigte, nicht konjugierte Doppelbindungen im Molekül aufweisen, und
0 bis 20 Gew.-% wasserlösliche monoethylenisch ungesättigte Monomere (d)
enthalten, wobei die Komponenten (a) bis (d) insgesamt 100 Gew.-% ergeben, in der Ölphase einer stabilen Öl-in-Wasser-Emulsion in Gegenwart von Radikale bildenden Polymerisationsinitiatoren polymerisiert, wobei man gegebenenfalls während der Polymerisation die Temperatur des polymerisierenden Reaktionsgemisches kontinuierlich oder periodisch erhöht,
wobei die Ölphase das Bleichhilfsmittel enthält oder aus diesem besteht.

6. Verfahren nach Anspruch 5, wobei der wäßrigen Phase für die Bildung der Öl-in-Wasser-Emulsion Elektrolyte zugesetzt werden.

7. Wasch- oder Reinigungmittel, enthaltend 0,01 bis 30 Gew.-% Mikrokapseln nach einem der Ansprüche 1 bis 4 und weitere übliche Inhaltsstoffe.

8. Wasch- und Reinigungsmittel nach Anspruch 7, enthaltend
0,5 bis 50 Gew.-% mindestens eines anionischen und/oder nicht-ionischen Tensids,
0,5 bis 60 Gew.-% mindestens eines anorganischen Builders,
0 bis 20 Gew.-% mindestens eines organischen Cobuilders,
0 bis 35 Gew.-% Perborat oder Percarbonat,
0,1 bis 20 Gew.-% Mikrokapseln nach einem der Ansprüche 1 bis 4,
0 bis 5 Gew.-% eines polymeren Farbübertragungsinhibitors,
0 bis 1,5 Gew.-% Protease,
0 bis 1,5 Gew.-% andere Waschmittelenzyme,
0 bis 1,5 Gew.-% eines Soil-Release-Polymers und/oder Vergrauungsinhibitors,
ad 100 Gew.-% übliche Hilfsstoffe und Wasser.

9. Verwendung von Mikrokapseln nach einem der Ansprüche 1 bis 4 zur kontrollierten Freisetzung von Bleichhilfsmitteln, die im Kermaterial der Mikrokapseln enthalten sind, durch Zerstörung ihrer Schale infolge der Einwirkung von wäßrigen Basen.

10. Verwendung eines Wasch- und Reinigungsmittels nach Anspruch 7 oder 8 zum Reinigen von Textilien.

## Claims

1. A microcapsule containing bleaching aids,
obtainable by polymerizing monomer mixtures which comprise
5-100% by weight of at least one ethylenically unsaturated carboxylic anhydride (a),
0-95% by weight of at least one monoethylenically unsaturated monomer (b) different from the monomers of group (a),
0-80% by weight of crosslinking monomers (c) which have at least two nonconjugated monoethylenic double bonds in the molecule, and
0-20% by weight of water-soluble monoethylenically unsaturated monomers (d),
where the total of components (a) to (d) is 100% by weight, in the oil phase of a stable oil-in-water emulsion in the presence of free-radical polymerization initiators, where the temperature of the polymerizing reaction mixture is, where appropriate, increased continuously or periodically during the polymerization, and where the oil phase contains or consists of the bleaching aid.

2. A microcapsule as claimed in claim 1, where the oil phase consists of the bleaching aid.

3. A microcapsule as claimed in claim 1 or 2, where the carboxylic anhydrides (a) are selected from internal anhydrides of ethylenically unsaturated dicarboxylic acids and anhydrides of ethylenically unsaturated monocarboxylic acids or mixtures thereof.

4. A microcapsule as claimed in any of claims 1 to 3, where the bleaching aid is a bleach activator and/or bleach catalyst.

5. A process for producing microcapsules containing bleaching aids, wherein monomer mixtures which comprise
5-100% by weight of at least one ethylenically unsaturated carboxylic anhydride (a),
0-95% by weight of at least one monoethylenically unsaturated monomer (b) different from the monomers of group (a),
0-80% by weight of crosslinking monomers (c) which have at least two nonconjugated monoethylenic double bonds in the molecule, and
0-20% by weight of water-soluble monoethylenically unsaturated monomers (d),
where the total of components (a) to (d) is 100% by weight, are polymerized in the oil phase of a stable oil-in-water emulsion in the presence of free-radical polymerization initiators, where the temperature of the polymerizing reaction mixture is, where appropriate, increased continuously or periodically during the polymerization, and where the oil phase contains or consists of the bleaching aid.

6. A process as claimed in claim 5, wherein electrolytes are added to the aqueous phase for producing the oil-in-water emulsion.

7. A detergent or cleaner comprising 0.01-30% by weight of microcapsules as claimed in any of claims 1 to 4 and other conventional ingredients.

8. A detergent or cleaner as claimed in claim 7, comprising
0.5-50% by weight of at least one anionic and/or nonionic surfactant,
0.5-60% by weight of at least one inorganic builder,
0-20% by weight of at least one organic cobuilder,
0-35% by weight of perborate or percarbonate,
0.1-20% by weight of microcapsules as claimed in any of claims 1 to 4,
0-5% by weight, of a polymeric color transfer inhibitor,
0-1.5% by weight of protease,
0-1.5% by weight of other detergent enzymes,
0-1.5% by weight of a soil release polymer and/or antiredeposition agent,
ad 100% by weight conventional auxiliaries and water.

9. The use of microcapsules as claimed in any of claims 1 to 4 for the controlled release of bleaching aids present in the core material of the microcapsules, by destruction of their shell resulting from the action of aqueous bases.

10. The use of a detergent or cleaner as claimed in claim 7 or 8 for cleaning textiles.

## Revendications

1. Auxiliaire de blanchiment contenant des microcapsules, pouvant être obtenues par polymérisation de mélanges de monomères contenant
de 5 à 100 % en poids d'au moins un anhydride carboxylique (a) à insaturation éthylénique,
de 0 à 95 % en poids d'au moins un monomère (b) à insaturation éthylénique, différent des monomères du groupe (a),
de 0 à 80 % en poids de monomères (c) à effet réticulant, qui contiennent dans leurs molécules au moins deux doubles liaisons non conjuguées à insaturation monoéthylénique, et
de 0 à 20 % en poids de monomères (d) solubles dans l'eau à insaturation monoéthylénique,
où les composants (a) à (d) font en tout 100 % en poids, dans la phase huileuse d'une émulsion stable huile dans l'eau, en présence d'amorceurs de polymérisation radicalaire, où on élève éventuellement en continu ou d'une manière périodique pendant la polymérisation la température du mélange réactionnel devant être polymérisé, la phase huileuse contenant l'auxiliaire de blanchiment ou étant constituée de ce dernier.

2. Microcapsules selon la revendication 1, où la phase huileuse est constituée de l'auxiliaire de blanchiment.

3. Microcapsules selon la revendication 1 ou 2, où les anhydrides carboxyliques (a) sont choisis parmi les anhydrides internes d'acides dicarboxyliques à insaturation éthylénique et les anhydrides d'acides monocarboxyliques à insaturation éthylénique ou leurs mélanges.

4. Microcapsules selon l'une des revendications 1 à 3, où l'auxiliaire de blanchiment est un activateur de blanchiment et/ou un catalyseur de blanchiment.

5. Procédé de préparation de microcapsules contenant un auxiliaire de blanchiment, dans lequel on polymérisé dans la phase huileuse d'une émulsion stable huile dans l'eau, en présence d'amorceurs de polymérisation radicalaire, des mélanges de monomères contenant
de 5 à 100 % en poids d'au moins un anhydride carboxylique (a) à insaturation éthylénique,
de 0 à 95 % en poids d'au moins un monomère (b) à insaturation éthylénique, différent des monomères du groupe (a),
de 0 à 80 % en poids de monomères (c) à effet réticulant, qui contiennent dans leurs molécules au moins deux doubles liaisons non conjuguées à insaturation monoéthylénique, et
de 0 à 20 % en poids de monomères (d) solubles dans l'eau à insaturation monoéthylénique,
où les composants (a) à (d) font en tout 100 % en poids, où on élève éventuellement, en continu ou d'une manière périodique pendant la polymérisation la température du mélange réactionnel devant être polymérisé,
la phase huileuse contenant l'auxiliaire de blanchiment ou en étant constituée.

6. Procédé selon la revendication 5, dans lequel la phase aqueuse destinée à la formation de l'émulsion huile dans l'eau est additionnée d'électrolytes.

7. Produit lavant ou détergent contenant de 0,01 à 30 % en poids de microcapsules selon l'une des revendications 1 à 4 et d'autres constituants usuels.

8. Produit lavant et détergent selon la revendication 7, contenant
de 0,5 à 50 % en poids d'au moins un tensioactif anionique et/ou non ionique,
de 0,5 à 60 % en poids d'au moins un adjuvant inorganique,
de 0 à 20 % en poids d'au moins un co-adjuvant organique,
de 0 à 35 % en poids d'un perborate ou d'un percarbonate,
de 0,1 à 20 % en poids de microcapsules selon l'une des revendications 1 à 4,
de 0 à 5 % en poids d'un inhibiteur polymère de transfert de colorant,
de 0 à 1,5 % en poids d'une protéase,
de 0 à 1,5 % en poids d'autres enzymes pour détergents,
de 0 à 1,5 % en poids d'un polymère d'enlèvement des salissures et/ou d'un inhibiteur de grisaillement,
le complément à 100 % en poids étant constitué d'auxiliaires usuels et d'eau.

9. Utilisation de microcapsules selon l'une des revendications 1 à 4 pour la libération contrôlée d'auxiliaires de blanchiment contenus dans le matériau de coeur des microcapsules, pour la destruction de leur gaine en conséquence de l'action de bases aqueuses.

10. Utilisation d'un produit lavant et détergent selon la revendication 7 ou 8 pour le nettoyage de textiles.
